# EUROPEAN PATENT SPECIFICATION

(11) **EP 0 347 859 B1**
(45) Date of publication and mention of the grant of the patent: **22.09.1993**
(21) Application number: 89111239.3
(22) Date of filing: 20.06.1989
(51) Int. Cl.: B60J 7/12, B60J 7/06, B60J 7/20

(54) **Flexible top apparatus of a vehicle**
Flexible Dachhautanordnung eines Fahrzeugs
Dispositif à capoté flexible pour un véhicule

(30) Priority: 20.06.1988 JP 153291/88; 28.06.1988 JP 162045/88; 29.05.1989 JP 137016/89
(43) Date of publication of application: 27.12.1989
(73) Proprietor: Mazda Motor Corporation, Aki-gun Hiroshima-ken (JP)
(72) Inventor: Asoh, Seiichi c/o Mazda Motor Corporation, Aki-gun Hiroshima-ken (JP); Kubota, Satoshi c/o Mazda Motor Corporation, Aki-gun Hiroshima-ken (JP); Fukuda, Hitoki c/o Mazda Motor Corporation, Aki-gun Hiroshima-ken (JP); Ushijima, Kajuhiro c/o Mazda Motor Corporation, Aki-ken Hiroshima-ken (JP); Murakami, Fumiyuki c/o Mazda Motor Corporation, Aki-gun Hiroshima-ken (JP); Taguchi, Tomoo c/o Mazda Motor Corporation, Aki-gun Hiroshima-ken (JP); Kohno, Shigefumi c/o Mazda Motor Corporation, Aki-gun Hiroshima-ken (JP)
(74) Representative: Melzer, Wolfgang, Dipl.-Ing.

(56) References cited:
- FR-A- 635 755
- GB-A- 444 907
- US-A- 1 922 545
- PATENT ABSTRACTS OF JAPAN, vol. 12, no. 428 (M-762)[3275], 11th November 1988; & JP-A-63 162 326 (NISSAN) 05-07-1988

## Description

### BACKGROUND OF THE INVENTION

### 1. Field of the Invention

The present invention relates to a flexible top apparatus of a vehicle, as an automobile.

### 2. Description of Related Art

There is an automobile in which an upper portion of the vehicle chamber is open to thereby enjoy open air.

The automobile of the open air type requires a member for covering its vehicle chamber to be used when required or needes as when it rains. As such a member may be used a foldable or windable flexible sheet, or a top.

Representative of such an automobile is one of full open type, which may be called a Cabriole type. An automobile of full open type as disclosed in U. S. Patent No. 4,572,570 is basically of a type designed to allow an upper portion and a rearward upper portion of its vehicle chamber are fully open. More specifically, the automobile is provided with a front window glass panel, but no rear pillar is provided which is otherwise required in order to support the roof panel and a rearward end portion of the roof panel. Although the automobile of the full open type presents the advantage that its vehicle chamber can be widely open, it poses various difficulties at the same time that a rigidity of the vehicle body is hardly ensured because neither roof panel nor rear pillar are mounted, that the flexible top should be constructed in such a shape as covering the rearward upper portion of the vehicle chamber as well as the upper portion thereof when it is brought into a closed state, thus complicating its structure, and that a sealing performance of the flexible top is poor when it closes the vehicle chamber.

There is accordingly the increasing tendency that an automobile of a flexible top type which may be called of a canvas top type (see U. K. Patent Specification No. 1,315,364 disclosing a top which corresponds to the preamble of claim 1). The automobile of flexible top type or canvas top type is such that only an opening formed on a roof panel - such an opening being referred to herein as "roof panel opening" - is covered (closed) or uncovered (opened) with a flexible sheet so that this type may called a flexible top or a so-called flexible roof. The automobile of this flexible top type is provided with a roof panel having a wide opening, or roof panel opening, connected to the vehicle body at least through front and rear pillars in such a manner that the roof panel opening is closed or opened with the flexible top. More specifically, the roof panel is of the type such that its whole middle portion is wide open as a roof panel opening except its front header, a pair of its left-hand and right-hand side rails, and its rear header. In other words, the front and rear headers and the side rails constitute a four-sided circumference of the roof panel opening and a front window glass panel is fixed with a pair of the left-hand and right-hand front pillars and the front header while a rear window glass panel is fixed with a pair of the left-hand and right-hand rear pillars and the rear header.

As the flexible top is in a closed state in which it fully closes the roof panel opening, the flexible top is designed such that its forward end is brought into abutment with the front header of the roof panel, its left-hand and right-hand side end portions are in abutment with the left-hand and right-hand roof side rails, and its rearward end is abutted with the rear header. This arrangement ensures a rigidity of the vehicle body to a sufficient extent because a framework of an upper circumference of the vehicle chamber is constituted by the left-hand and right-hand front pillars, front header, left-hand and right-hand roof side rails as well as rear header, such members being connected to each other. This structure further provides the advantage that it is simple because the flexible top is designed simply to open or close the roof panel opening. Furthermore, it presents the advantage that most common automobiles with a roof panel supported with front and rear pillars can be converted to those of flexible top type by small modifications. For the above reasons, recently, there is the tendency that automobiles of flexible top type increase dramatically.

The automobile of the flexible top type is designed so as to take a closed posture, or to become in a closed state, in which the roof panel opening is closed by fixing a rearward end portion of the flexible top to the rear header while abutting a forward end portion of the top with the front header, on the one hand, and so as to take an open posture, or to become in an open state, in which the roof panel opening is wide open by transferring the forward end portion of the top rearwardly to a large extent from the closed posture toward the rear header. At this open posture, the flexible top is housed or accommodated in a folded or wound state.

For the automobiles of conventionally flexible top type, however, the flexible top in a housed state is still extended wide in a longitudinal direction so that it covers over a considerably large portion of the roof panel opening, thus impairing a sufficiently open feeling. It is further to be noted that, as the roof panel opening is open while the flexible top is housed, the flexible top is in a state that it projects upwardly to a considerable extent, thus resisting air during running so that it increases a resistance to air and it causes running noises derived from wind blowing.

### SUMMARY OF THE INVENTION

Therefore, the present invention has the object to provide a flexible top apparatus of a vehicle, as automobile, capable of opening an upper portion of its vehicle chamber and housing a flexible top so as to cause no resistance to air during running.

In order to achieve the object, the present invention consists of a flexible top apparatus of a vehicle, comprising:
a roof panel connected to a vehicle body through at least a pair of left-hand and right-hand front pillars, a pair of left-hand and right-hand rear pillars;
said roof panel comprising a front header, a pair of left-hand and right-hand roof side rails and a rear header, which are disposed so as to enclose a roof panel opening;
a rear window glass panel being fixed to said pair of left-hand and right-hand rear pillars and said rear header;
a flexible top being foldable or windable in a longitudinal direction of a vehicle body of the vehicle and being as large in size in an extended state in which said flexible top is extended in said longitudinal direction as said roof panel opening and being provided to close said roof panel opening;
in which said flexible top is in abutment at its forward end portion with said front header, at its left-hand and right-hand side end portions with said left-hand and right-hand roof side rails, and at its rearward end portion with said rear header when said roof panel opening is in a closed state in which said flexible top in such an extended state covers said roof panel opening; and
said flexible top selectively takes a first posture and a second posture, said first posture being taken when said flexible top is in said closed state and said second posture being taken when said flexible top is housed or accommodated in a folded or wound state, said position being taken by displacing said flexible top along said pair of left-hand and right-hand roof side rails and said pair of left-hand and right-hand rear pillars, the flexible top being housed or accomodated at a position rearward of said rear window glass panel and around a lower end portion thereof.

The present invention constituted by the construction as have been described hereinabove permits a housing of the flexible top rearward of a rear window glass panel and around its lower end portion. The housing of the flexible top does not block a roof panel opening and does not cause an increase in resistance to air during running.

### BRIEF DESCRIPTION OF THE DRAWINGS

Other objects, features and advantages of the present invention will become apparent in the course of the description of the preferred embodiments which follows when interpreted in the light of the accompanying drawings, in which:
FIGS. 1 to 13 are directed to the first embodiment of the flexible top apparatus of a vehicle according to the present invnetion, in which:
   FIG. 1 is a perspective view showing an outline of top and rearward portions of the vehicle body when looked at from rearward;
   FIG. 2 is a perspective view showing a mounting relation of the vehicle body with the base frame in a state in which the flexible top is excluded, corresponding to FIG. 1;
   FIG. 3 is a cross-sectional view taken along the line X3-X3 of FIG. 1;
   FIG. 4 is a cross-sectional view taken along the line X4-X4 of FIG. 1;
   FIG. 5 is a cross-sectional view taken along the line X5-X5 of FIG. 1;
   FIG. 6 is a cross-sectional view taken along the line X6-X6 of FIG. 1;
   FIG. 7 is a cross-sectional view taken along the line X7-X7 of FIG. 1;
   FIG. 8 is a cross-sectional view taken along the line X8-X8 of FIG. 1;
   FIG. 9 is a perspective view showing one example of the top;
   FIG. 10 is a briefed cross-sectional side view showing a manner of operation of the top;
   FIGS. 11(a) and (b) are cross-sectional views showing a connection of a forward portion of the top, in which FIG. 11(a) shows a state of the top in a closed state and FIG. 11(b) shows a state of the top immedeately prior to the opening of the top;
   FIG. 12 is a perspective view showing a detail of a drive means for driving the top; and
   FIGS. 13(a) and (b) are perspective views showing a stte of the top, in which FIG. 13(a) shows the top at its first posture, or in a closed state, and FIG. 13(b) shows the top at its second posture, or in an open state;
FIGS. 14 to 18 are directed to the second embodiment of the flexible top apparatus, in which:

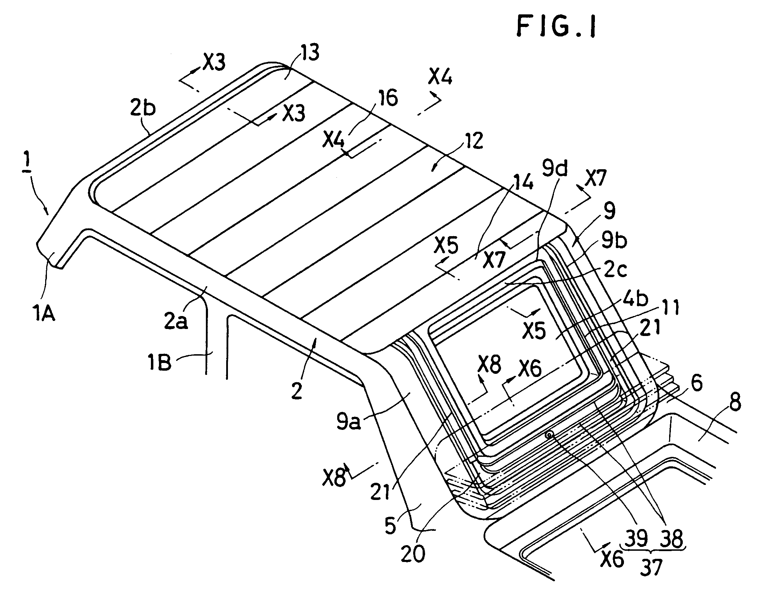

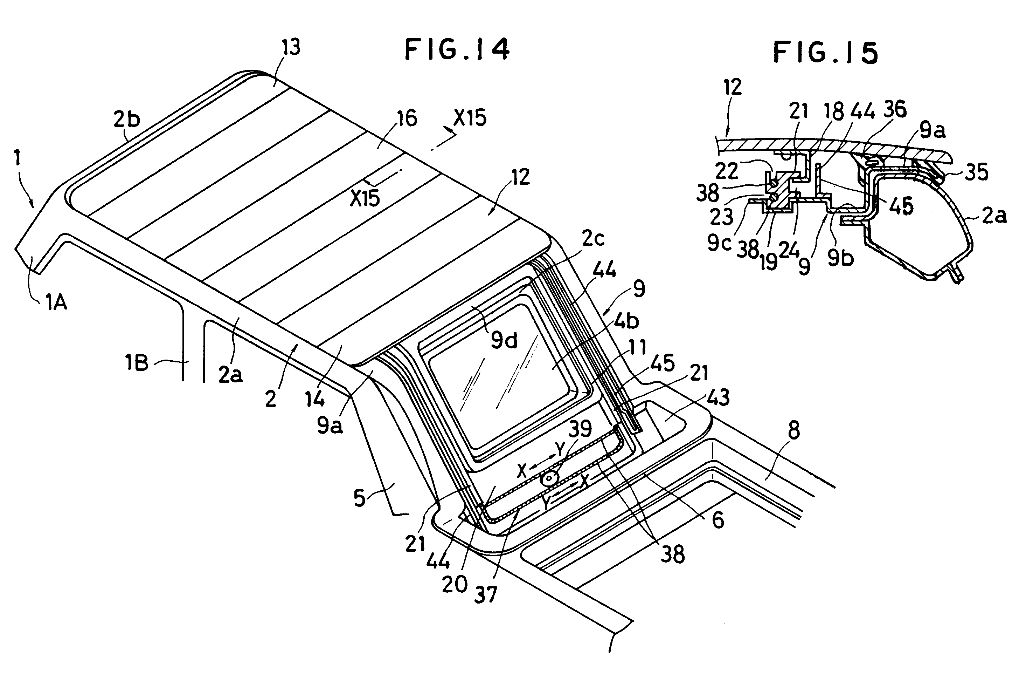

   FIG. 14 is a perspective view corresponding to FIG. 1;
   FIG. 15 is a cross-sectional view taken along the line X15-X15 of FIG. 14;

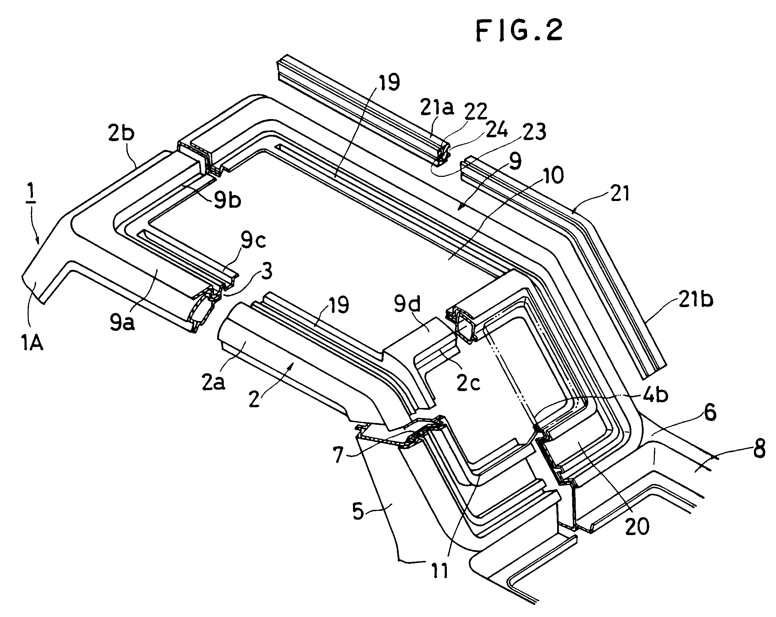

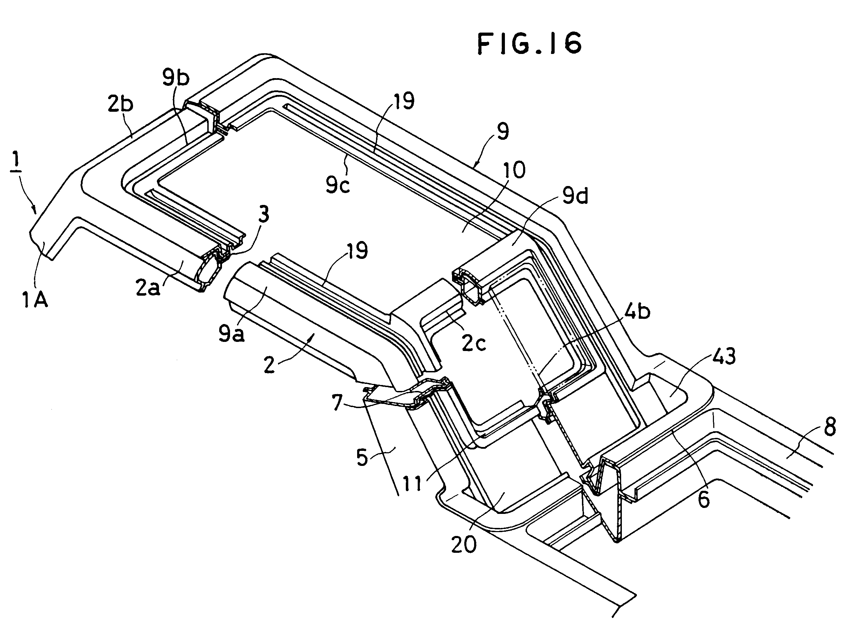

   FIG. 16 is a perspective view corresponding to FIG. 2;

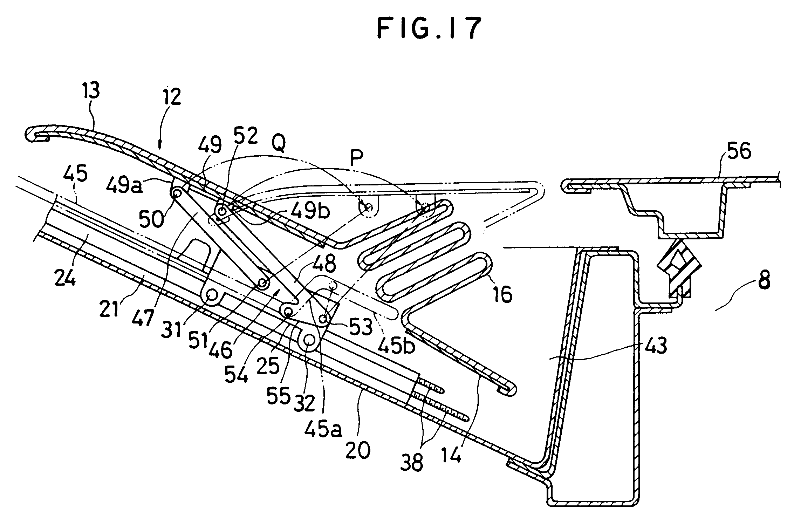

   FIG. 17 is a cross-sectional side view showing operation of the top during housing or accommodation;

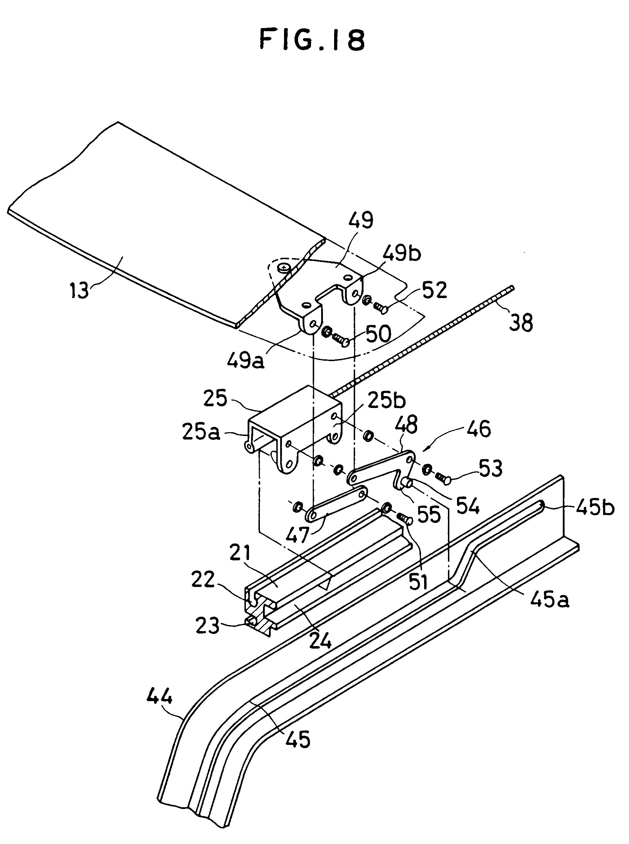

   FIG. 18 is an exploded perspective view showing a detail of the forward end portion of the top;

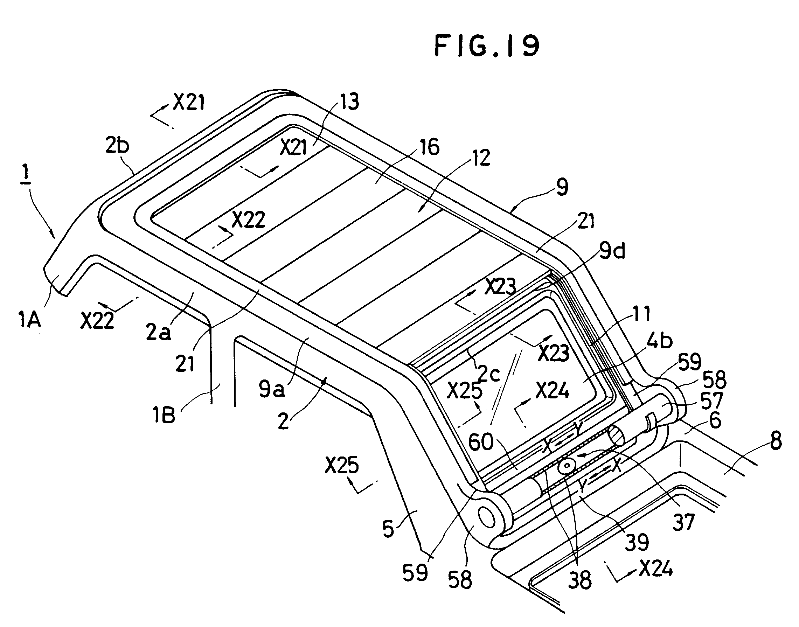

FIGS. 19 to 26 are directed to the third embodiment of the flexible top apparatus, in which:
   FIG. 19 is a perspective view corresponding to FIG. 1;

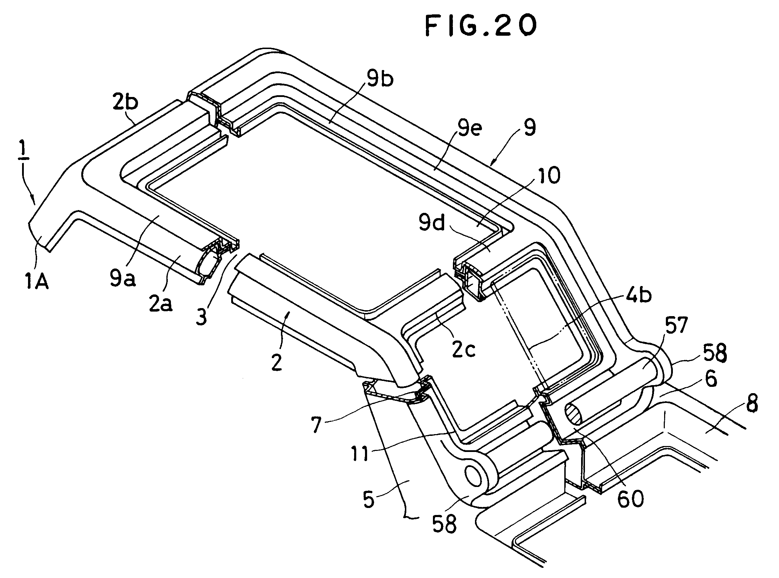

   FIG. 20 is a perspective view corresponding to FIG. 2;
   FIG. 21 is a cross-sectional view taken along the line X21-X21 of FIG. 19;

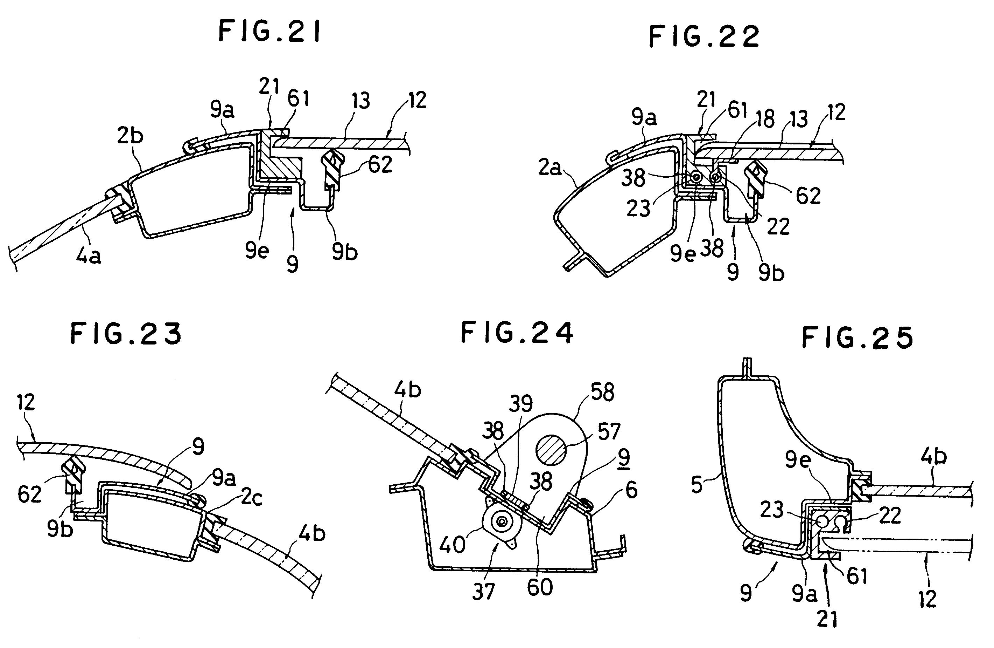

   FIG. 22 is a cross-sectional view taken along the line X22-X22 of FIG. 19;
   FIG. 23 is a cross-sectional view taken along the line X23-X23 of FIG. 19;
   FIG. 24 is a cross-sectional view taken along the line X24-X24 of FIG. 19;
   FIG. 25 is a cross-sectional view taken along the line X25-X25 of FIG. 19; and

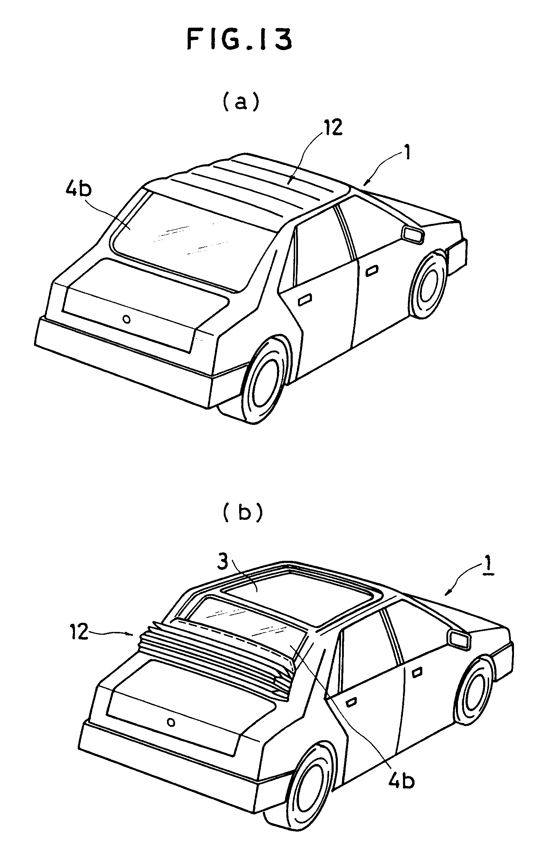

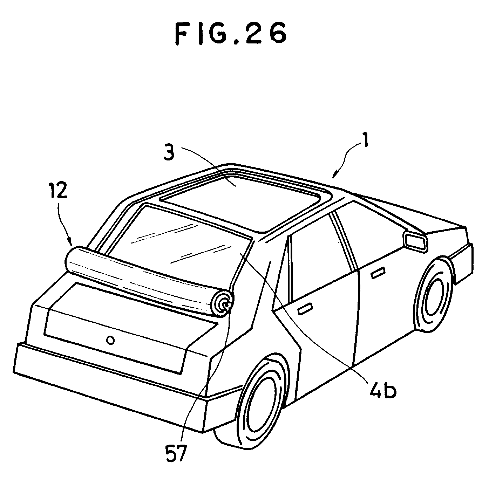

   FIG. 26 is a perspective view corresponding to FIG. 13(b); and

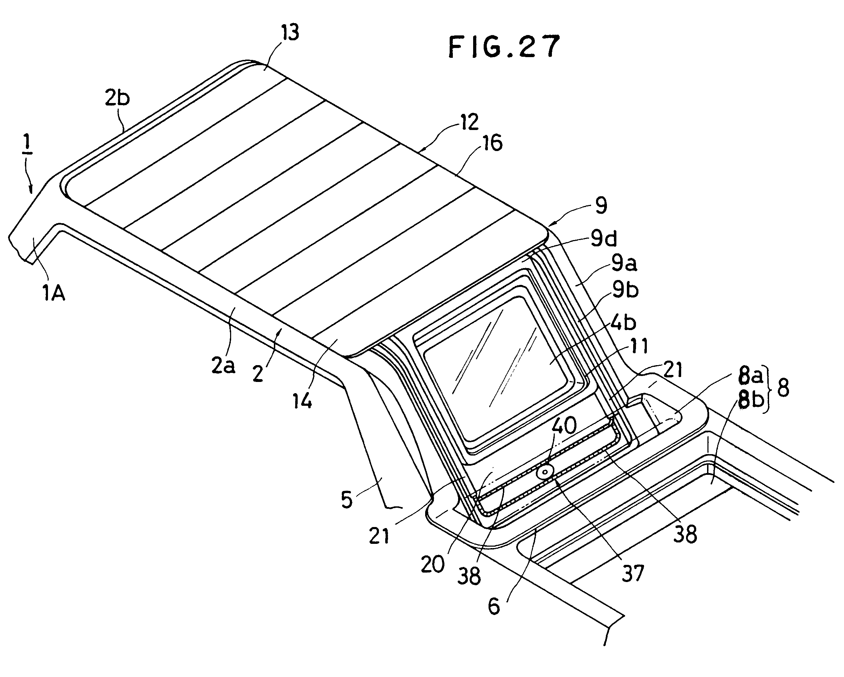

FIGS. 27 to 35 are directed to the fourth embodiment of the flexible top apparatus according to the present invention, in which:
   FIG. 27 is a perspective view corresponding to FIG. 1;

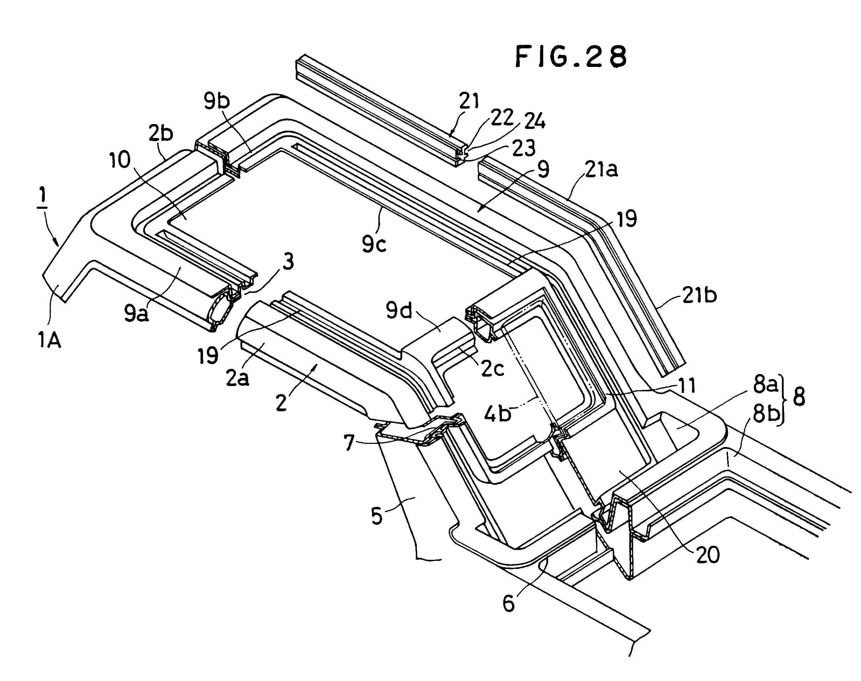

   FIG. 28 is a perspective view corresponding to FIG. 2;

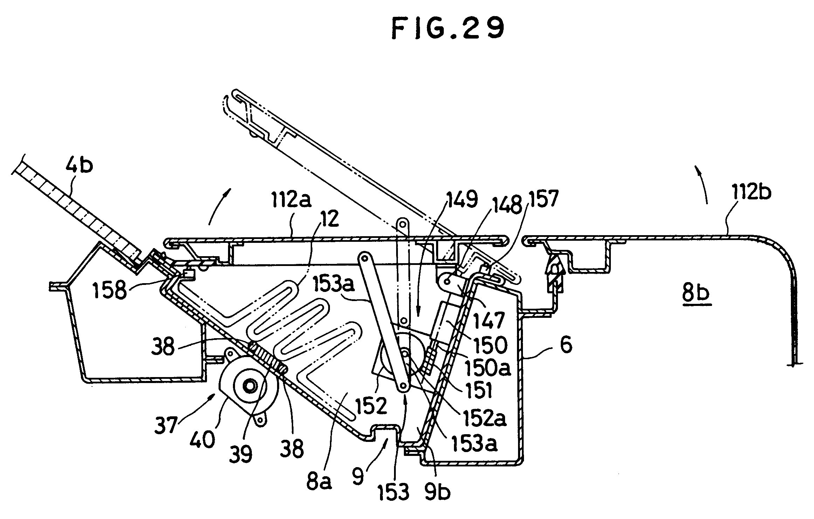

   FIG. 29 is a cross-sectional view showing operation of a subsidiary lid;

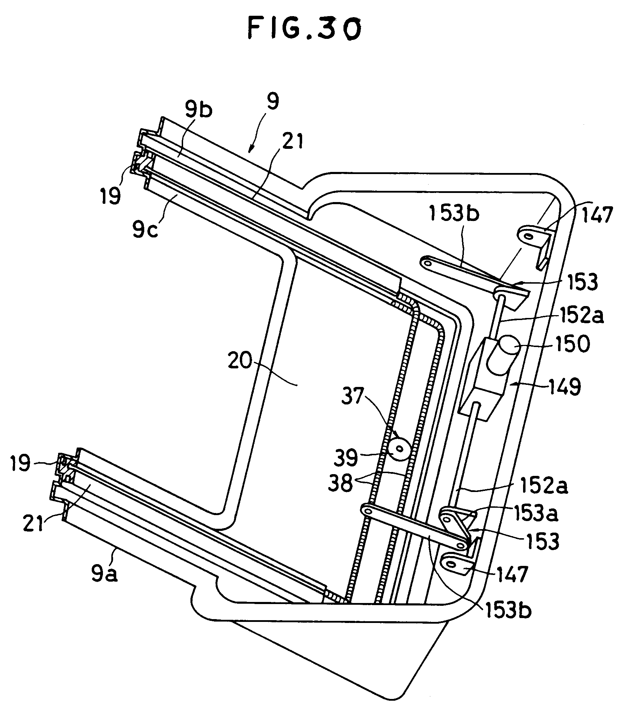

   FIG. 30 is a perspective view showing the inside of a subsidiary trunk room;

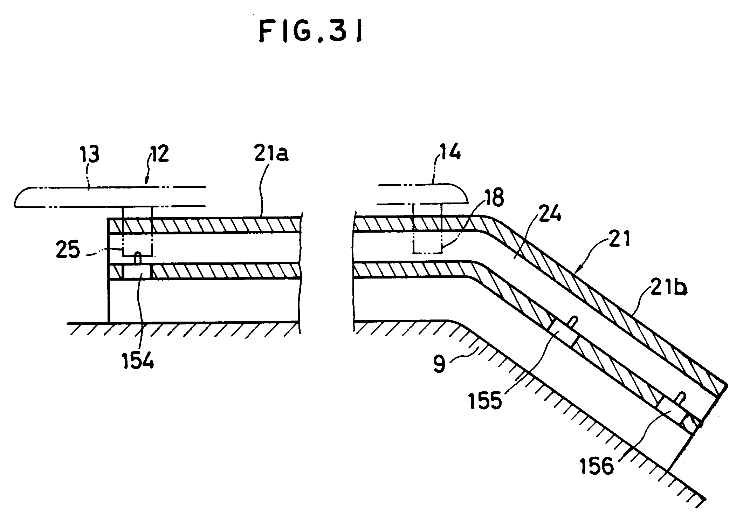

   FIG. 31 is a briefed side view showing a disposition of switches for sensing positions of the top;

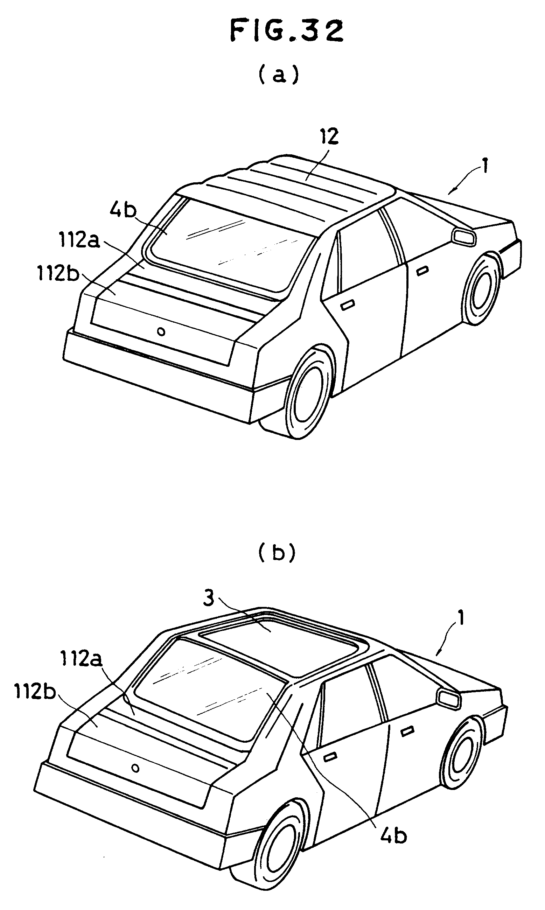

   FIGS. 32(a) and (b) are perspective views showing a state of the top, in which FIG. 32(a) shows the top in a closed posture and FIG. 32(b) shows the top in an open posture;

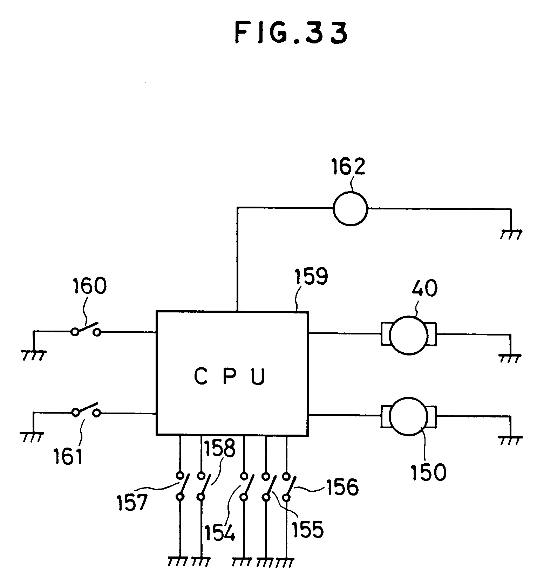

   FIG. 33 is a block diagram showing a drive control system; and

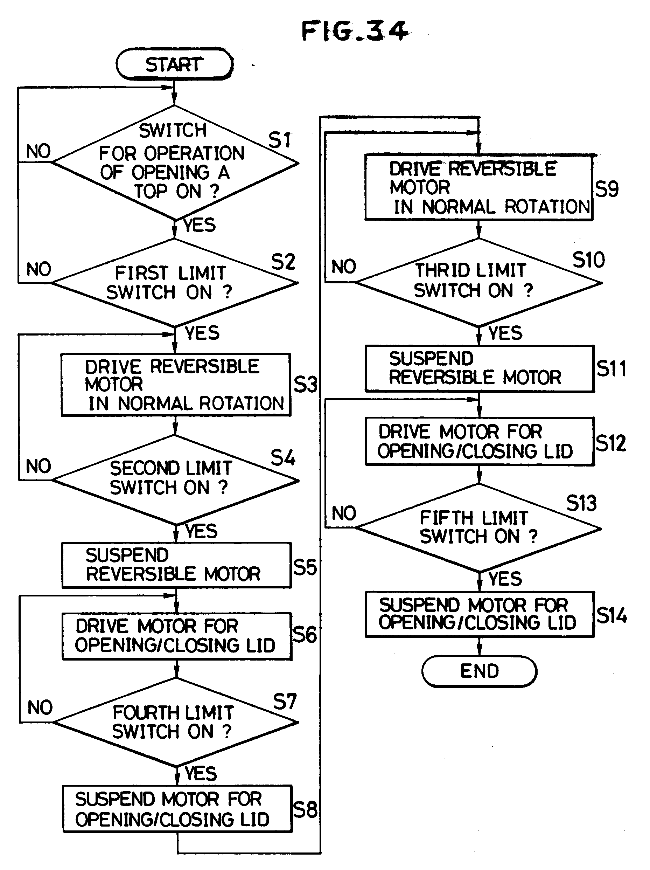

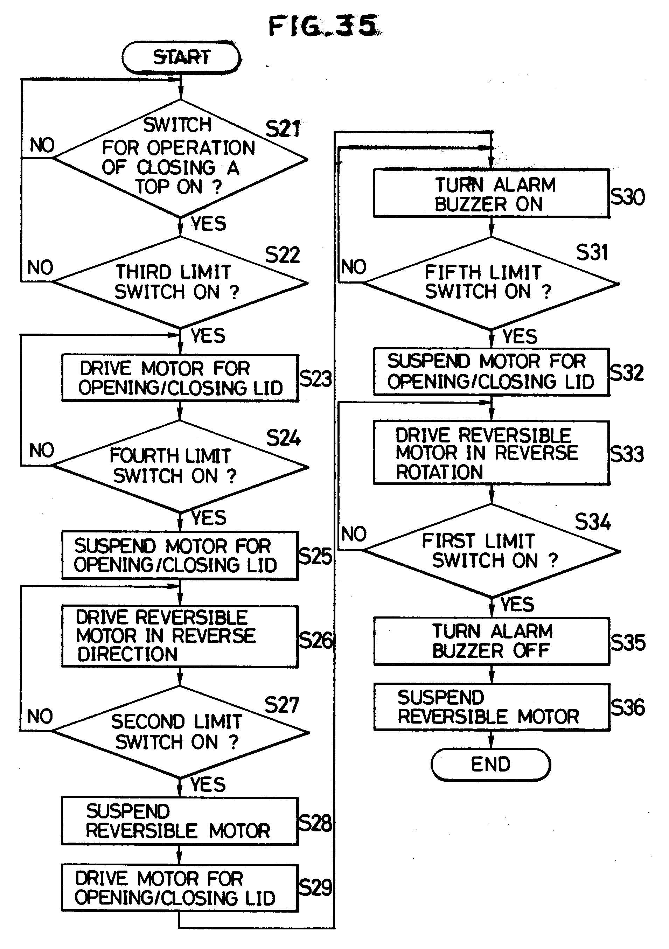

   FIGS. 34 and 35 are flowcharts showing control of the drive control system.

### DETAILED DESCRIPTION OF THE PREFERRED EMBODIMENTS

The present invention will be described more in detail with reference to the accompanying drawings.

### First Embodiment

FIGS. 1 to 11 are directed to the first embodiment of a structure of the canvas top for a vehicle, such an automobile, in accordance with the present invention.

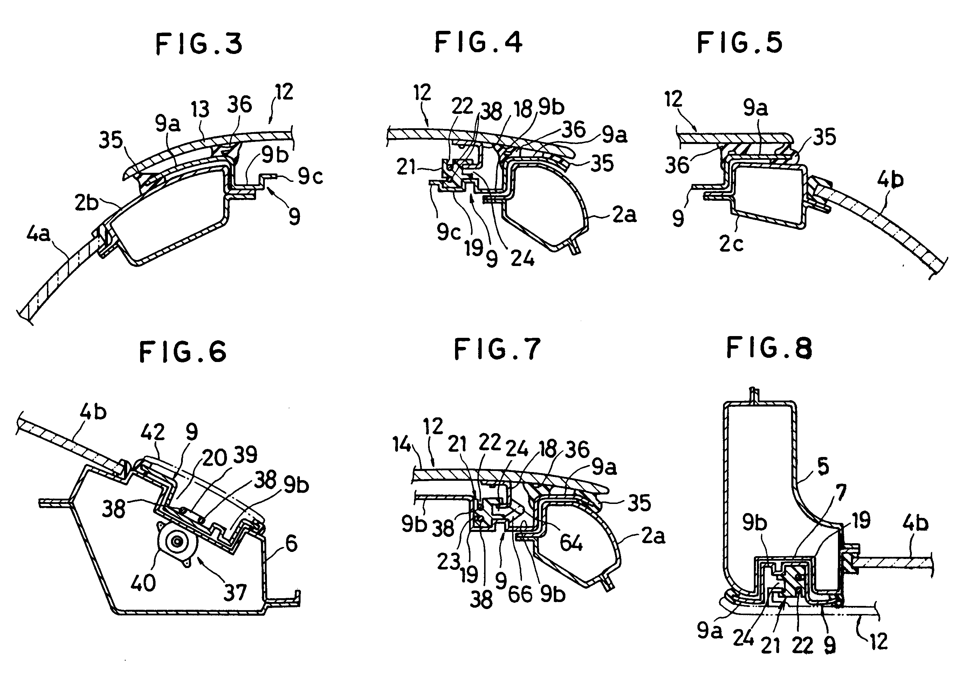

As shown specifically in FIG. 2, the vehicle is provided with a roof panel 2 which is connected to the vehicle body 1 through a pair of left-hand and right-hand front pillars 1A, a pair of left-hand and right-hand center pillars 1B, and a pair of left-hand and right-hand rear pillars 1C. The roof panel 2 is provided over its substantially whole upper area with a roof panel opening 3 which is enclosed by left-hand and right-hand roof side rails 2a and 2a as well as front and rear headers 2b and 2c, respectively. On a forward side of the front header 2b is disposed a forward windshield glass panel 4a as shown in FIG. 3, while a rearward windshield glass panel 4b is disposed on a rearward side of the rear header 2c as shown in FIG. 5. The left-hand and right-hand roof side rails 2a 2a are extended, respectively, to comprise rear pillars 5, 5 so as to interpose both edge portions of the rearward windshield glass panel 4b which, in turn, is interposed at its forward and rearward edge portions between the rearwardside of the rear header 2c and a rear deck 6, respectively. The front glass window glass 4a is fixed to the pair of left-hand and right-hand front pillars 1A and the front header 2b, while the rear window glass panel 4b is fixed to the pair of left-hand and right-hand rear pillars and the rear header 2c. The rear pillars 5, 5 and the rear deck 6 are provided each with a groove 7 in which a base frame 9 for a flexible top, or a canvas top, is inserted as will be described hereinbelow. The groove 7 is continuously integral with an inner edge of each of the roof side rails 2a and 2a of the roof panel 2. As shown in FIGS. 1 and 2, reference numeral 8 denotes a trunk room.

As shown in FIGS. 1 and 2, the base frame 9 is of a shape such that it is inserted in the roof side rails 2a, 2a, the front header 2b and the rear header 2c as well as in the groove 7 formed on the rear pillars 5, 5 and the rear deck 6. In other words, the base frame 9 is provided with an opening 10 on the roof side and an opening 11 on the windshield glass side corresponding, respectively, to the roof panel opening 3 and the rearward windshield glass panel 4b. The base frame 9 comprises an outward ring-shaped frange portion 9a in abutment with the roof side rails 2a, 2a, the front header 2b, the rear pillars 5, 5, and the rear deck 6, a ring-shaped rain rail portion 9b formed on an inner circumferential side of the frange portion 9a, and an inward frange portion 9c formed as an extension portion on an inner circumferential side of the rain rail portion 9b. Between the openings 10 and 11 is provided a partition portion 9d in abutment with the rear header 2c.

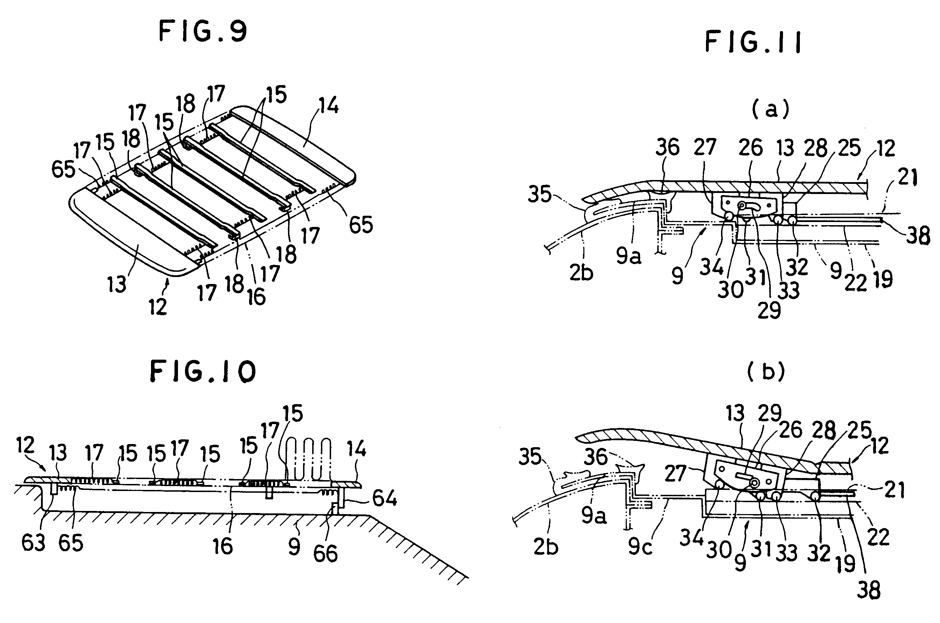

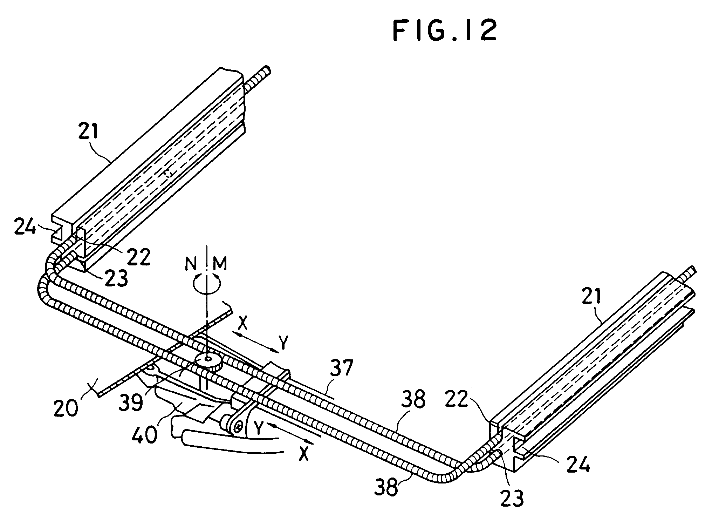

The opening 10 is covered or uncovered with a top 12 functioning as a flexible top, or a canvas top. As shown in FIG. 9, the top 12 comprises a front hard portion 13 of a hard plate form located on its forward side, a rear hard portion 14 of a hard plate form located on its rearward side, five skeleton members, generally referred to as 15, disposed longitudinally at substantially equal intervals so as to transversely elongate or bridge between both sides of the opening 10, and a leather top portion 16 connecting the hard portions 13 and 14 to each other and connecting the skeleton members 15 to each other. The top 12 is further designed so as to be foldable for housing by interposing each of three springs, generally referred to as 17, between the front hard portion 13 and the first row of the skeleton member 15, the second and third rows thereof, and the fourth and fifth row thereof, respectively, as shown by the chain line in FIG. 1. As shown in FIG. 9, the rear hard portion 14 and the second and fourth rows of the skeleton members 15, 15 are provided at each of their both side end portions with an L-shaped guide piece, generally referred to as 18, projecting in a downward direction. As shown in FIG. 10, front and rear projections 63 and 64 are provided, respectively, on bottom surfaces of the front and rear hard portions 13 and 14 and an urging means 65 is interposed between the front and rear projections 63 and 64. The urging means 65 is to urge a force so as to allow the front and rear hard portions 13 and 14 to come relatively closer to each other and its length is determined so as to allow the top 12 in a folded state to become in a free state, as shown by the chain line in FIG. 10. The rear projection 64 provided on the side of the rear hard portion 14 of the top 12 is designed so as to be engageable with an engagement piece 66 projected from the inward frange portion 9c located on the rearward edge on the roof side of the base frame 9. In other words, as shown in FIGS. 7 and 10, the rear projection 64 serves as a stopper mechanism for determining a location of the rear hard portion 14 at the rear edge of the opening 10 on the roof side in a state in which the opening 10 is covered with the top 12. On the other hand, as shown in FIG. 10, the front projection 63 provided from the front hard portion 13 of the top 12 is shorter than the rear projection 64 and unengageable with the engagement piece 66 on the side of the base frame 9. In FIGS. 3 and 7, reference numerals 35 and 36 denote each a seal member for sealing a gap between the top 12 and the base frame 9.

As shown in FIG. 6, the inward frange portion 9c of the base frame 9 is provided at its both sides in a longitudinal direction each with an engagement groove 19 for mounting a guide rail 21 for guiding a movement of the top 12. The engagement groove 19 is communicated at its rearward end with a wide communication groove 20 extending in a transverse direction.

Turning back to FIG. 2, each of the guide rails 21 is shown to comprise a first guide portion 21a located at the corresponding side of the opening 10 on the roof side, and a second guide portion 21b elongated integrally from a rear end of the first guid portion 21a. The guide rail 21 is provided with an upper guide groove 22 and a lower guide groove 23, both of which extend in a longitudinal direction of the vehicle body so as to slidably insert drive wires 38 and 38 constituting part of a drive means 37 for transferring the top 12, and with a rail portion 24 for guiding slidably the guide pieces 18 mounted on the both side portions of the rear hard portion 14 and the skeleton members 15 and 15 of the top 12.

Referring now to FIGS. 11(a) and 11(b), a connecting jig 25 is mounted through a bracket 26 on a lower surface of the front hard portion 13 to connect a forward end of the drive wire 38 inserted in the upper guide groove 22. The bracket 26 is fixed to the front hard portion 13 by a pair of fixing members 27 and 28 and forms a guide groove 29 which extends in a longitudinal direction of the vehicle body and a rear end portion of which is inclined downwardly. The connecting jig 25 is movably engaged with the guide groove 29 through a pin 30. The connecting jig 25 is provided at its forward and rearward ends with projecting engagement pins 31 and 32, respectively, engaged with the rail portion 24 of the guide rail 21. The fixing member 28 on the rearward side is provided with a projecting engagement pin 33 while the fixing member 29 on the forward side is provided with a projecting engagement pin 34 which is engageable with an upper portion of the guide rail 21 when the top 12 is operated to open, on the one hand, and which becomes located on the inward frange portion 9c upon disconnection from a forward end of the guide rail 21 when the top 12 is closed, on the other hand. More specifically, in this embodiment, as shown in FIG. 11(a), when the top 12 is closed, a location of the engagement pin 34 on the inward frange portion 9c by disconnection from the forward end of the guide rail 21 embodies a state in which the forward end of the front hard portion 13 is abuttable with the outward frange portion 9a located on the front header 2b. At this time, the pin 30 of the connecting jig 25 is engaged with a horizontal forward end portion of the guide groove 29. As shown in FIG. 11(b), when the top 12 is operated to open, as the connecting jig 25 is transferred rearwardly by a pulling force of the drive wire 38, the engagement pin 34 is brought into engagement with an upper portion of the guide rail 21 to thereby incline a forward end of the front hard portion 13 upwardly. This can reduce a sliding resistance upon operation to open the top 12. At this time, the pin 30 of the connecting jig 25 is engaged with a downwardly inclining portion on the rearward end side of the guide groove 29.

As shown again in FIG. 6, the drive means 37 comprises a pair of drive wires 38 and 38 connecting the connecting jigs 25 and 25 mounted on both sides of the front hard portion 13, a gear 39 disposed in the communication groove 20 and engageable with the drive wires 38 and 38, and a reversible motor 40 mounted on a lower surface side of the communication groove 20 for reversibly rotating the gear 39. In the drawing, reference numeral 42 denotes a covering member for covering an upper portion of the commnunication groove 20 disposed on the base frame 9. Each of the drive wires 38 is connected to the connecting jig 25 disposed in the upper guide groove 22 of the guide rail 21 on one side and is disposed to extend rearwardly in the upper guide groove 22 so as to be communicated through the communication groove 20 with the inside of the lower guide groove 23 of the guide rail 21 on another side. Each of the drive wires 38 is further provided on its outer circumference with a toothed form to become in mesh with the gear 39 and is designed so as to be relatively movable in both directions as indicated by the arrow X or by the arrow Y upon rotation of the gear 39, as shown in FIG. 12. In other words, when the reversible motor 40 is rotated in a normal rotational direction, i.e., in the direction as indicated by the arrow M in FIG. 12, on the one hand, the drive wires 38 and 38 are relatively transferred in the direction as indicated by the arrow X in FIG. 12 in order to operate to open the top 12 by a normal rotation of the gear 39. When the reversible motor 40 is rotated in a reverse rotational direction, i.e., in the direction as indicated by the arrow N in FIG. 12, on the other hand, the drive wires 38 and 38 are relatively transferred in the direction as indicated by the arrow Y in FIG. 12 in order to be operated to close the top 12 by a reverse rotation of the gear 39, i.e., by rotating the gear 39 in a reverse direction.

As shown in FIGS. 1 and 13(a), when the top 12 is used in an ordinary state, the top 12 is in such a state that it closes the roof panel opening 3 of the roof panel 2 - in this embodiment, the opening 10 on the roof side of the base frame 9. In other words, the top 12 is referred to in this specification as being located at a first posture which covers the roof panel opening 3. At the first posture, the top 12 is maintained in a closed state by a force pushing forwardly the front hard portion 13 by the drive means 37 and by a force regulating a forward movement of the top 12, such a force being created by an engagement of the rearward projection 64 mounted on the rear hard portion 14 with the engagement piece 66 projected on the side of the base frame 9.

The top 12 at the first posture is operated to open by following procedures.

As the reversible motor 40 constituting the drive means 37 is rotated in a normal rotational direction, the drive wires 38 and 38 are relatively transferred toward the direction as indicated by the arrow X in FIG. 12. This relative transferal of the drive wires 38 and 38 forces the front hard portion 13 of the top 12 connected through the connecting jigs 25 and 25 to forward ends of the drive wires 38 and 38 to be pulled rearwardly by an urging force of an urging means 65, thus folding the top 12 at a position where the urging means 65 is released to a free state, as shown by the chain line in FIG. 10. Thereafter, the top 12 is guided downwardly by the guide rails 21 and 21 and then housed at a folded state at a position rearward of the windshield glass panel and around a lower end portion thereof, as shown in FIG. 13(b) and by the chain line in FIG. 1. The lower end position of the windshield portion at which the top 12 is housed is referred to in this specification briefly as a second posture. At the second posture, the roof panel opening 3 of the roof panel 2 - in this embodiment, the opening 10 on the roof side of the base frame 9 - is in a state in which it is thoroughly open, providing fully open feeling to passengers. In a state where the top 12 is located at the second posture, the top 12 does not increase an air resistance during running so that this arrangement is advantageous from the viewpoint of air resistance.

Operation for closure of the top 12 is carried out by rotation of the reversible motor 40 in a reversely rotational direction to relatively transfer the drive wires 38 and 38 in the direction indicated by the arrow Y in FIG. 12. This relative movement of the drive wires 38 and 38 forces the front hard portion 13 of the top 12 connected to the forward ends of the drive wirds 38 and 38 through the connecting jigs 25 and 25 to be pushed forwardly and transfers the top 12 by means of a guidance by the guide rails 21 and 21 to a position where the rearward projection 64 mounted on the rear hard portion 14 is engaged with the engagement piece 66 on the side of the base frame 9. The top 12 is then moved against the urging force of the urging means 65 until the front hard portion 13 is located at a forward edge of the opening 10 on the roof side of the base frame 9, whereby the top 12 is located at the first posture at which it is disposed so as to close the opening portion 3 of the roof panel 2, namely, the opening 10 on the roof side of the base frame 9, as shown by the solid line in FIG. 1 and in FIG. 13(a).

### Second Embodiment

FIGS. 14 to 18 are directed to the second embodiment of a structure of the flexible top for the vehicle in accordance with the present invention. In this embodiment, the identical elements are provided with the same reference numerals and a duplicate description on these elements will be omitted from the following description for a brevity of explanation.

Referring to FIGS. 14, 16 and 17, a top housing chamber 43 is disposed at a position rearward of the windshield glass panel 9 and nearby a lower end portion thereof in the vehicle body 1, which is disposed extending from the base frame 9 and is provided with a space large enough to accommodate the top 12 in a folded state. The guide rails 21 and 21 are elongated to both sides of the top housing chamber 43. As shown in FIGS. 15 and 18, the inward frange portion 9c of the base frame 9 is provided with a link-guiding guide rails 44 and 44 elongating in parallel to each other outward of the guide rails 21 and 21. Each of the link-guiding guide rails 44 is provided with a guide groove 45 for guiding a link member (will be described hereinbelow) interposed between the front hard portion 13 of the top 12 and the connecting jig 25 connected to a forward end of the drive wire 38. As shown specifically in FIGS. 17 and 18, the guide groove 45 elongates in a longitudinal direction of the vehicle body and at its rearward portion toward a higher guide portion 45b through an inclination portion 45a. In this embodiment, as shown in FIG. 18, the connecting jig 25 connected to the forward end of the drive wire 38 is in a downwardly open, squared C-shaped form. An inward side piece portion 25a of the connecting jig 25 is connected to the forward end of the drive wire 38 in the upper guide groove 22 of the guide rail 21 while an outward side piece portion 25b thereof is provided at forward and rearward portions of its lower end with projecting engagement pins 31 and 32, respectively, which is projected inwardly and is engageable with the rail portion 24 of the guide rail 21. Between the front hard portion 13 of the top 12 and the outward side piece portion 25b of the connecting jig 25 is interposed a link mechanism 46 comprising first and second links 47 and 48 in parallel to each other, respectively. As shown in FIG. 17, the link mechanism 46 is to change postures of the front hard portion 13 from a posture in parallel to the rear pillar 5 (in other words, the windshield glass panel 4b) - namely, from a posture of movement at the time of operation to open the top 12 - to a horizontal posture covering a upper portion of the top housing chamber 43, as shown by the chain line in FIG. 17, when the top 12 is being housed. The first link 47 is pivotably supported at its both sides by a forward support section 49a of a support jig 49 fixed to the front hard portion 13 through a support pin 50 and by the connecting jig 25 through a support pin 51, while the second link 48 is pivotably supported at its both sides by a rearward support section 49b of the support jig 49 fixed to the front hard portion 13 through a support pin 52 and by the connecting jig 25 at a position rearward of a support point of the first link 47 through a support pin 53, respectively. The second link 48 is integrally provided forwardly at its support end portion on the side of the connecting jig 25 with an extension portion 55 which is provided a projecting engagement pin 54 engageable with the guide groove 45 of the link-guiding guide rail 44. More specifically, when the top 12 is operated to be opened or closed, the front hard portion 13 of the top 12 is transferred rearwardly or forwardly, while maintaining its posture substantially in parallel to the guide rail 21 in a state in which the engagement pin 54 projected from the extension portion 55 of the second link 48, as the connecting jig 25 is moved in a rearward direction or in a forward direction along the guide rail 21 by means of a rearwardly pulling force by the drive wire 38 or by means of a forwardly pushing force thereby. Furthermore, as shown in FIGS. 17 and 18, when the top 12 is housed in the top housing chamber 43 in a folded state, as the engagement pin 54 projected from the extension portion 55 of the second link 48 is transferred toward the higher guide portion 45b after guidance on the inclination portion 45a at the rearward end portion of the guide groove 45, the second link 48 is pivoted about the support pin 53 in a direction as indicated by the arrow P in FIG. 17. As the second link 48 is pivoted, the first link 47 is pivoted about the support pin 51 in a direction as indicated by the arrow Q in FIG. 17. As a result, the front hard portion 13 of the top 12 takes a posture so as to cover the upper portion of the top housing chamber 43 and is turned into a state where it is on substantially the same surfacial position as a trunk lid 56 covering an upper portion of the top housing chamber 43. Thus, in this embodiment, the top 12 can be thoroughly housed in the top housing chamber 43 located downward of the windshield glass panel 4b on the rearward side. And during housing, no rearward visual range through the windshield glass panel 4b is blocked. Furthermore, this structure in the second embodiment ensures a flush surface on a rearward portion of the vehicle body of a vehicle, as an automobile.

It is to be noted that other structures and functions of this second embodiment are substantially the same as in the first embodiment as have been described hereinabove so that a description on such is omitted for an avoidance of description in duplicate.

### Third Embodiment

FIGS. 19 to 26 are directed to the third embodiment of a structure of the flexible top according to the present invention. The same elements are provided with the same reference numerals as in the first and second embodimets. A description of such elements will be omitted for a brevity of explanation.

In this embodiment, the top 12 capable of covering or uncovering the opening portion 13 of the roof panel 12 is wound on a winding rod 57 disposed at a position rearward of the windshield glass panel 4b and nearby a lower end portion thereof while the top 12 is housed.

The winding rod 57 is rotatably supported by bearings 58 and 58 projected on both sides of rearward end portion fo the outward frange portion 9a of the base frame 9 in a state in which it is urged by an appropriate means (not shown) in a constantly winding direction in which the top 12 is wound. To the winding rod 57 is windably fixed end portions of connecting belts 59 and 59 connected to both side ends of an end portion of the top 12. Thus, in this embodiment, when the top 12 is closed, a rearward end portion of the 12 pulled rearwardly by a winding force of the winding rod 57 in a state in which the winding rod 57 is urged in the constantly winding direction so that no stopper mechanism as provided in the first and second embodiments is any longer required in order to regulate a movement of the rearward end portion of the top 12.

In this embodiment, the top 12 differs from that used in the first and second embodiments hereinabove and it comprises a front hard portion 13 and a leather top portion 16. It is to be noted that, unlike those used in the first and second embodiments, the leather top portion 16 is not provided with any spring between the skeleton members to be mounted thereon, thereby providing the top 12 with flexibility so as to be windable on the winding rod 57.

In this embodiment, as showin in FIGS. 20, 21, 22 and 25, unlike that used in the first and second embodiments, the base frame 9 is provided with a stair portion 94 which mounts the guide rail 21 on an inner edge of the outward frange portion 9a in abutment with the roof side rails 2a, 2a of the roof panel 2, the front header 2b, the rear pillars 5, 5, and the rear deck 6. On an inner edge of the stair portion 9e and a forward edge of a partition portion 9d is provided the rain rail portion 9b. At a rearward end portion of the stair portion 9e is provided a concave portion 60 for the disposition of the drive wires 38 and 38 and the gear 39 constituting the drive means 37. The guide rail 21 extend over a full length from a forward side to both left-hand and right-hand sides in the stair portion 9e and is provided with a guide portion 61 in a squared C-shaped form in cross section for guiding a circumferential edge portion of the top 12. In this embodiment, as shown in FIGS. 22 and 25, the guide rail 21 is provided with guide grooves 22 and 23 for inserting the drive wires 38 and 38, respectively, guide grooves being disposed side by side at inside and outside positions. In this embodiment, a gap between the top 12 and the base frame 9 is sealed by a seal member 62 mounted on an inner edge of the rain rail portion 9b.

The other structures and functions of this embodiment are substantially the same as those of the first and second embodiments, and a description on them is accordingly omitted from this specification for a brevity of explanation.

In this third embodiment, as shown in FIG. 19, when the top 12 is disposed to cover the roof panel opening 3 of the roof panel 2, the top 12 takes the first posture at which the opening portion 3 of the roof panel 12 is covered with the top 12. At this first posture, the top 12 is maintained in a state in which it covers the roof panel opening 3 by means of a forward force to be applied to the front hard portion 13 through the drive wires 38 and 38 and by means of a rearward force to be applied to the rearward end of the leather top portion 16 through connecting belts 59 and 59 by a winding force of the winding rod 57 urged in a winding direction.

The reversible motor 40 constituting the drive means 37 is driven in a normal rotational direction and relatively moves the drive wires 38 and 38 in a direction as indicated by the arrow X in FIG. 19 by means of a normal rotation of the gear 39. This movement forces the front hard portion 13 of the top 12 connected to forward ends of the drive wires 38 and 38 to be rearwardly pulled through the connecting jigs 25 and 25, whereby the top 12 is wound from the rearward end portion one by one on the winding rod 57 (urged in a constantly winding direction) by the connecting belts 59 and 59 while being guided by the guide rails 21 and 21. More specifically, the top 12 takes the second posture at which it is housed at a position rearward of the windshield glass panel 4b and about a lower end portion thereof, as shown in FIG. 26. At this second posture, the roof panel opening 3 is in a fully open state - in this embodiment, the opening 10 of the base frame 9 on the roof side - thus providing passengers with a sufficiently open feeling. At this posture, the top 12 is fully housed at a position nearby a lower end portion of the windshield glass panel 4b so that this incurs little risk of increasing an air resistance during running, thus presenting the advantage from the viewpoint of air resistance.

The top 12 is operated to be closed by rotating the reversible motor 40 in a reverse direction and, as a result, relatively moving the drive wires 38 and 38 in a direction as indicated by the arrow Y in FIG. 19 by a reverse rotation of the gear 39. This movement pushes forwardly the front hard portion 13 of the top 12 connected to forward ends of the drive wires 38 and 38 through the connecting jigs 25 and 25, and the top 12 is then caused to be moved to a position at which the connecting belts 59 and 59 are thoroughly wound back while being guided by the guide rails 21 and 21 until it takes the first posture at which it covers the roof panel opening 3, i.e., the opening 10 of the base frame 9 on the roof side.

In each of the above embodiments, a base frame 9 in a separate construction may be mounted on an upper portion of the vehicle body 1 or a base frame for a flexible top may be integrally formed with the vehicle body 1.

### Fourth Embodiment

FIGS. 27 to 35 are directed to the fourth embodiment of a structure of the flexible top for the vehicle in accordance with the present invention, which involves housing the top 12 in a trunk room when it is opened and housed. In this embodiment, the identical elements are provided with the same reference numerals and a duplicate description on these elements will be omitted from the following description for a brevity of explanation.

As shown in FIGS. 27 to 29, the base frame 29 is provided at its rearward end portion with a subsidiary room 8a having a space large enough to house the top 12 in a folded state. The subsidiary room 8a forms a trunk room 8 in association with a main room 8b disposed at a position rearward of the subsidiary room 8a and divided therefrom by the rear deck 6. Alternatively, the trunk room 8 may be of a one-room construction in which the top 12 is housed at its forward portion. In either case, the top 12 may be of substrantially the same construction as in FIGS. 9 and 10. As shown in FIG. 29, an upper opening of the trunk room 8 is opened or closed by a lid 112 which, in this embodiment, comprises a subsidiary lid 112a which is disposed on the side of an upper opening of the subsidiary room 8a and which can be opened in front or opened from the forward portion, and a mian lid 112b which is disposed on the side of an upper opening of the main room 8b. In an alternative case, the upper openings of both the subsidiary room 8a and the main room 8b can be covered so as to be opened or closed in rear by one lid to be opened from the rearward position.

Referring to FIG. 31, the guide rail 21 is provided with three limit switches 154, 155 and 156 operable to turn on upon a contact of the guide piece 18 to be guided on the rail portion 24 with the connecting jig 25. More particularly, the guide rail 21 is provided at its forward end portion with the first limit switch 154, at its intermediate portion with the second limit switch 155, and at its rearward end portion with the third limit switch 156. The first limit switch 154 is turned on as the top 12 is brought into contact with the connecting jig 25 disposed on a lower surface of the front hard portion 13 of the top 12 in such a state that the opening 10 on the roof side is covered by the top 12. The second and third limit switches 155 and 156, respectively, are turned on upon a contact with the guide piece 18 disposed on a lower surface of the rear hard portion 14 of the top 12 in such a state that the top 12 is just about to be housed or that an accommodation of the top 12 has been finished. Referring to FIG. 33, ON signals from the limit switches 154, 155 and 156 are given in a microcomputer 59 functioning as a control means as will be described hereinabelow.

In this embodiment, as shown in FIGS. 29 and 30, the subsidiary lid 112a covering or uncovering the upper opening of the subsidiary room 8a is pivotably supported on brackets 147 and 147 fixed on upper end portions of the rear deck 6 through shafts 148 and 148, respectively, so as to be opened or closed by a drive means 149 for opening or closing the lid 8. The drive means 149 comprises a motor 150 for opening or closing the lid, a worm gear 151 mounted on a rotary shaft 150 of the motor 150, a bevel gear 152 to be meshed with the worm gear 151, and link mechanisms 153 and 153 connected pivotably to both sides of the bevel gear 152. Each of the link mechanisms 153 comprises a first link section 153a connected to an end portion of the rotary shaft 152a of the bevel gear 152, and a second link section 153b for connecting a side portion of the first link section 153a to a lower surface of the subsidiary lid 112a. Thus the bevel gear 152 to be rotated upon the driving of the motor 50 permits a displacement of the link mechanism 153 from a state as shown by the solid line to a state as shown by the chain line in FIG. 29, whereby the subsidiary lid 112a is opened toward a rearward direction in such a manner as from the state as shown by the solid line to the state as shown by the chain line in the drawing. On an opening edge of the upper opening of the subsidiary room 8a are mounted a fourth limit switch 157 capable of being turned on upon a contact with a rearward edge of the subsidiary lid 112a in such an open state in which the subsidiary lid 112a is opened and a fifth limit switch 158 capable of being turned on upon a contact with a forward edge thereof in a closed state in which it is closed. ON signals from these limit switches 157 and 158 are also given in the microcomputer 159 serving as the control means as will be described more in detail hereinbelow, as shown in FIG. 33.

The microcomputer 159 is provided with the ON signals from the limit switches 154, 155, 156, 157, and 158 and ON signals from a top opening switch 160 for generating an instruction for operation of opening the top 12 and from a top closing switch 161 for generating an instruction for operation of closing the top 12. The microcomputer 159 comprises the reversible motor 40 constituting the drive means 37 for driving the opening or closing of the top, and the lid-opening/closing motor 150 constituting the drive means 37 for opening or closing the lid. It also enables a control over operation of an alarm buzzar for generating an alarm at the time when the top 12 is operated to be closed.

More particularly, as in this embodiment, the microcomputer 159 is to carry out a control over the driving of the drive means 37 for opening or closing the top, i.e., the reversible motor 40, and the drive means 149 for opening or closing the lid, i.e., the motor 150 for opening or closing the lid, in such a manner that the subsidiary lid 112a is operated to be opened at the time of a movement from a state of operation of housing the top 12 or from a state of housing or accommodation to a state in which the top 12 is used to cover the roof panel opening and that the subsidiary lid 112a is operated to be closed at the time when the top 12 is housed or accommodated or when the top 12 is being used and, furthermore, to carry out a control over generating or suspending the alarm buzzar 162.

The action of the flexible top according to the present invention will be described more in detail with reference to flowcharts as shown in FIGS. 34 and 35.

As shown in FIGS. 27 and 32(a), when the top 12 is used to cover the roof panel opening 3 of the roof panel 2 - in this embodiment, the opening 10 of the base frame 9 on the roof side, it takes the first posture. At the first posture, the top 12 is maintained in a state in which it covers the opening 10 of the base frame 9 by matching a force applied by the drive means 37 for forwardly pushing the front hard portion 13 against the urging force of the urging means 65 interposed between the front hard portion 13 and the rear hard portion 14 with a force for regulating a forward movement by an engagement of the rearward projection 64 mounted on the rear hard portion 14 with the engagement piece 66 projected on the side of the base frame 9.

Operation of the top 12 at the first posture will be operated to open in a manner as will be described hereinbelow with reference to FIG. 34.

At step S1, the switch 160 for operation to open the top 12 is turned on and, at step S2, the first limit switch 154 is turned on upon contact with the connecting jig 25 mounted on the front hard portion 13 of the top 12 in a closed state. Then at step S3, the microcomputer 159 generates an instruction output for driving the reversible motor 40 constituting the drive means 37 for opening or closing the top. Driving a rotation of the reversible motor 40 in a normal direction on the basis of the instruction rotates the gear 39 in a normal direction to thereby move relatively the drive wires 38 in the direction as shown by the arrow X in the drawing. This pulls rearwardly the front hard portion 13 of the top 12 connected to the forward ends of the drive wires 38 and 38 through the connecting jigs 25 and 25 by the urging force applied by the urging means 65 and the top 12 is folded at a position at which the urging means 65 becomes in a free state. Thereafter, the top 12 is transferred forwardly while being guided by the second guid portions 21 and 21. In the course of transferal, at step S4, the second limit switch 155 is turned on upon contact with the guid piece 18 mounted on the rear hard portion 14 of the top 12. In response to an ON signal from the second limit switch 155, the microcomputer 159 then provides an instruction to suspend a rotation of the reversible motor 40 and a rearward movement of the top 12. Simultaneously, the lid-opening/closing motor 150 constituting the drive means 149 for opening or closing the lid is driven at step S6 and the driving of the motor 150 for opening or closing the lid rotates the worm gear 151 and the bevel gear 152, thereby displacing the link mechanism 153 upon a rotation of the bevel gear 152 and thus operating the subsidiary lid 112a in a manner as indicated by the chain line in FIG. 29. Termination of the opening operation of the subsidiary lid 112a is detected by an ON operation of the fourth limit switch 157 at step S7. At this time, the driving of the motor 150 for opening or closing the lid is suspended at step S8 and, at the same time, the driving of a rotation of the reversible motor 40 in a normal direction is resumed at step S9, thus resuming the rearward movement of the top 12. .

As the top 12 has been housed or accommodated completely, the third limit switch 156 is turned on upon contact with the guide piece 18 at step S10. Then an ON signal from the third limit switch 156 is generated to and received by the microcomputer 159 which, in turn, provides an instruction to suspend the rotation of the reversible motor 40 at step S11. Simultaneously, the motor 150 for opening or closing the lid is driven again at step S12. Driving the motor 150 for opening or closing the lid rotates the worm gear 151 and the bevel gear 152 displacing the link mechanism 153 to operate the subsidiary lid 112a to the closed state as indicated by the solid line in FIG. 29 from the open state as indicated by the chain line therein. Termination of the operation to closed the subsidiary lid 112a is detected by causing the fifth limit switch 158 to be turned on at step S13 and the driving of the motor 150 for opening or closing the lid is then suspended at step S14. This operation permits an accommodation or housing of the top 12 in a folded state in the subsidiary room 8a of the trunk room 8. In other words, the top 12 takes the second posture in which it is accommodated or housed in the trunk room 8 as shown in FIG. 32(b). At the second posture, the roof panel opening 3 - in this embodiment, the opening 10 of the base frame 9 on its roof side - is in a fully open state, thereby providing a sufficient open feeling to passengers. In a state in which the top 12 takes the second posture at which it is housed in the subsidiary room 8a of the trunk room 8, no risk is incurred to increase a resistance to air during running so that it is extremely advantageous from the viewpoint of air resistance.

Description on the operation for closing the top 12 will be described in accordance with the flowchart shown FIG. 35.

At step S21, the switch 161 for opening or closing the lid is turned on and this operation permits the third limit switch 156 to be turned on at step S22 because it is in contact with the guide piece 18 mounted on the rear hard portion of the top 12 in a state in which it is housed or accommodated in the subsidiary room 8a. This ON signal is generated to the microcomputer 159 which, in turn, generates an instruction to drive the motor 150 for opening or closing the lid at step S23. Rotation of the motor 150 drives the rotation of the worm gear 151 and the bevel gear 152 displacing the link mechanism 153 to operate the subsidiary lid 112a to move to the open state as indicated by the chain line in FIG. 29. Completion of the opening operation of the subsidiary lid 112a is detected by the fourth limit switch 157 which is turned on at step S24. At this point of time, the rotation of the motor 150 is suspended at step S25 and the reversible motor 40 is driven in a reverse rotation at step S26. This reverse rotation of the reversible motor 40 rotates the gear 39 in a reverse direction transferring the drive wires 38 and 38 relatively in the direction as indicated by the arrow Y in FIG. 12. The relative movement pushes forwardly the front hard portion 13 of the top 12 connected to the forward ends of the drive wires 38 and 38 through the connecting jigs 25 and 25, resulting in a forward movement of the top 12 while being guided by the second guide portions 21 and 21. In the course of this movement, at step S27, the second limit switch 155 is turned on upon a contact with the guide piece 18 mounted on the rear hard portion 14 of the top 12. In response to an ON signal from the second limit switch 155, the microcomputer 159 gives an instruction to suspend the rotation of the reversible motor 40 and simultaneously to suspend the forward movement of the top 12 at step S28. At the same time, the motor 150 for opening or closing the lid is driven again at step S 29 and an alarm buzzar 162 is turned on to draw attention to passengers that the top 12 is in the course of closing operation at step S 30. Driving the motor 150 rotates the worm gear 151 and the bevel gear 152 and the rotations of the gears displaces the link mechanism 153 operating the subsidiary lid 112a to move to the closed state as indicated by the solid line from the open state as indicated by the chain line in FIG. 29. The fact that the closing operation of the subsidiary lid 112a has been finished is sensed by the turning-on of the fifth limit switch 158 at step S31 and, at this time, the driving of the motor 150 is suspended at step S32. Thereafter, the rotation of the reversible motor 40 in a reverse direction is resumed at step S33, resuming a forward movement of the lid 12 and moving the lid 12 in a forward direction to a position at which the rearward projection 64 of the rear hard portion 14 of the top 12 is brought into engagement with the engagement piece 66 projected on the side of the base frame 9. Then the front hard portion 13 of the top 12 is forced to be moved up to the forward edge of the opening 10 of the base frame 9 on its roof side against the urging force of the urging means 65, whereby the top 12 is moved to take the first posture where the roof panel opening 3, i.e., the opening 10 of the base frame 9 on its roof side, is fully closed as shown in FIGS. 27 and 32(a). As the closing of the roof panel opening 3, or the opening 10 on the roof side of the base frame 9, has been finished, the first limit switch 154 is turned on upon a contact with the connecting jig 25 at step S34, turning the alarm buzzar 162 off at step S35 and suspending the driving of the reversible motor 40 at step S36.

As have been described hereinabove, this embodiment is designed such that the microcomputer 159 is operated to control the drive means 37 for opening or closing the top and the drive means 149 for opening or closing the lid, thus permitting an automatic control over the opening and closing of the top 12 and the subsidiary lid 112a.

The present invention has been described by way of examples, it is to be noted herein that the flexible top 12 may selectively take its first and second postrues by manual operation. In this case, the flexible top 12 may be provided with a handle or a concave portion which can be used with fingers.

The present invention may be embodied in other specific forms without departing from the spirit and scope thereof. The present embodiments as have been described hereinabove are therefore to be considered in all respects as illustrative and not restrictive, the scope of the invention being indicated by the appended claims, and all the changes, modifications and variations which come within the meaning and range of equivalency of the claims are therefore intended to be encompassed within the spirit and scope of the invention.

## Claims

1. A flexible top apparatus of a vehicle comprising:
a roof panel (2) connected to a vehicle body (1) through at least a pair of left-hand and right-hand front pillars (1A) and a pair of left-hand and right-hand rear pillars (5);
said roof panel (2) comprising a front header (2b), a pair of left-hand and right-hand roof side rails (2a) and a rear header (2c), which are disposed so as to enclose a roof panel opening (3);
a rear window glass panel (4b) being fixed to said pair of left-hand and right-hand rear pillars (5) and said rear header (2c); and
a flexible top (12) being foldable or windable in a longitudinal direction of a vehicle body of the vehicle and being as large in size in an extended state in which said flexible top (12) is extended in said longitudinal direction as said roof panel opening (3) and being provided to close said roof panel opening (3);
in which said flexible top (12) is in abutment at its forward end portion with said front header (2b), at its left-hand and right-hand side end portions with said left-hand and right-hand roof side rails (2a) and (2a), respectively, and at its rearward end portion with said rear header (2c) when said roof panel opening (3) is in a closed state in which said flexible top (12) in such an extended state covers said roof panel opening (3);
said flexible top (12) selectively taking a first posture and a second posture, said first posture being taken when said flexible top (12) is in said closed state and said second posture being taken when said flexible top (12) is housed or accommodated in a folded or wound state; said flexible top apparatus characterized in that said postures are taken by displacing said flexible top (12) along said pair of left-hand and right-hand roof side rails (2a) and (2a) and said pair of left-hand and right-hand rear pillars (5) and (5), and in that the flexible top is housed or accomodated at a position rearward of said rear window glass panel (4b) and around a lower end portion thereof.

2. A flexible top apparatus as claimed in claim 1, wherein said flexible top (12) comprises a front hard portion (13) constituting a forward end portion of said flexible top (12) of a hard plate form, a rear hard portion (14) constituting a rearward end portion thereof in a hard plate form, and a leather top portion (16) comprising a flexible sheet connecting said front hard portion (13) to said rear hard portion (14) and said flexible top (12) is foldable by flexibility produced by said leather top portion (16).

3. A flexible top apparatus as claimed in claim 2, wherein:
said rear header (2c) is provided with an engagement piece (66) in a fixed manner; and
said rear hard portion (14) is provided with a rearward projection (64) so as to be abuttable with said engagement piece (66) from rearward; and
said rear hard portion (14) is regulated so as not to be displaced forwardly from a position at which said flexible top (12) is in a closed state due to abutment of said engagement piece (66) with said projection (64).

4. A flexible top apparatus as claimed in claim 2 or 3, further comprising an urging means (65) for urging so as to allow said front hard portion (13) and said rear hard portion (14) to come closer to each other.

5. A flexible top apparatus as claimed in anyone of claims 2 to 4, wherein said flexible top (12) takes a third posture in which said front hard portion (13) is in an extend state or in a folded state at a position around said rear hard portion (14) in a state in which said rear hard portion (14) is in abutment with said rear header (2c) and said flexible top (12) maintains its folded state between said third and second postures.

6. A flexible top apparatus as claimed in anyone of claims 3 to 5, further comprising a drive means (37, 149) for driving said front hard portion (13) and altering a posture of said flexible top (12) between said first and second postures.

7. A flexible top apparatus as claimed in claim 6, wherein said drive means (37) comprises a motor (40) and a drive wire (38) connected at one end portion to said front hard portion (13) and drivable reciprocally by said motor (40).

8. A flexible top apparatus as claimed in claim 1, wherein said pair of left-hand and right-hand roof side rails (2a) and said pair of left-hand and right-hand rear pillars (5) are provided each with a guide portion for guiding left-hand and right-hand side end portions of said flexible top (12), respectively, and said guide portion comprises a first guide portion (21a) extending in a longitudinal direction of said vehicle body along said roof side rails (2a) and a second guid portion (21b) communicating with said first guide portion (21a) and extending virtually along said rear pillars (5).

9. A flexible top apparatus as claimed in claim 8, wherein said guide rail (21) with said guide portion is separately formed as said roof side rail (2a) and as said rear pillar (5) and said guide rail (21) is fixed to said roof side rail (2a) and said rear pillar (5).

10. A flexible top apparatus as claimed in claim 1, wherein:
said flexible top (12) is flexible and windable as a whole;
a winding rod (57) extending in a transverse direction is rotatably disposed at a position rearward of said rear window glass panel (4b) and at a lower end portion thereof; and
said winding rod (57) is connected to a rear end portion of said flexible top (12) by a connecting belt (59).

11. A flexible top apparatus as claimed in claim 10, wherein a winding roll (57) is provided so as to be urged in a direction in which said flexible top (12) is wound.

12. A flexible top apparatus as claimed in claim 10 or 11, further comprising a drive means (37) for driving a forward end portion of said flexible top (12).

13. A flexible top apparatus as claimed in claim 12, wherein said drive means comprises a motor (40) and a drive wire (38) drivable reciprocally by said motor (40) and connected at its one end portion to said forward portion of said flexible top (12).

14. A flexible top apparatus as claimed in claims 1 and in anyone of claims 8 to 13, wherein said vehicle body (1) is provided with a concave portion (43, 8a) at a position rearward of said rear window glass panel (4b) and araound its lower end portion for housing said flexible top in said second posture.

15. A flexible top apparatus as claimed in claim 14, wherein said concave portion (8a) is provided with a lid member (112a) for closing said concave portion (8a) which houses said flexible top (12).

16. A flexible top apparatus as claimed in claim 15, wherein:
a trunk room (8) is provided at a position rearward of a lower portion of said rear window glass panel (4b);
said trunk room (8) comprises a subsidiary room (8a) constituting said concave portion and a main room (8b) located at a position rearward of said subsidiary room (8a);
a trunk lid for closing said trunk room (8) comprises a subsidiary lid (112a) for opening or closing said subsidiary room (8a) and a main lid (112b) for opening or closing said main room (8b); and
said subsidiary lid (112a) is opened in front and said main lid (112b) is opened in rear.

17. A flexible top apparatus as claimed in claim 15 or 16, further comprising:
a first drive means (37) for driving said flexible top (12) between said first posture and said second posture;
a second drive means (149) for driving said lid member (112a) for opening or closing;
a drive control means (159) for closing said lid member (112a) at a usual time by controlling said second drive means (149) in synchronization with said first drive means (37) or for opening said lid member (112a) when said flexible top (12) is taken in or from said concave portion (8a).

18. A Flexible top apparatus as claimed in anyone of claims 14 to 17, wherein:
said flexible top (12) comprises a front hard portion (13) constituting a forward end portion of said flexible top (12) of a hard plate form, a rear hard portion (14) constituting a rearward end portion thereof in a hard plate form, and a leather top portion (16) comprising a flexible sheet connecting said front hard portion (13) to said rear hard portion (14) and said flexible top (12) is foldable by flexibility produced by said leather top portion (16);
a connecting jig (25) is provided so as to be displaced along said roof side rails (2a) and said rear pillars (5); and
said connecting jig (25) is connected to said front hard portion (13) through a link mechanism (46);
a cam (45a, 45b) for link operation acting on said link mechanism (46) in vicinity of said concave portion (43) and inclining said front hard portion (13) so as to become substantially horizontal in accordance with a displacement of said connecting jig (25) toward said concave portion (43);
in which said concave portion (43) is covered with said front hard portion (13) in a substantially horizontal state when said flexible top (12) takes said second posture.

19. A flexible top apparatus as claimed in claim 18, further comprising:
a drive wire disposed displacibly along said roof side rails (2a) and said rear pillars (5) and connected at its one end portion to said connecting jig (25); and
a motor (40) for reciprocally driving said drive wire (38).

## Patentansprüche

1. Flexible Dachhautanordnung eines Fahrzeugs, die umfaßt:
ein Dach (2), das mit der Fahrzeugkarosserie (1) über wenigstens eine linke und rechte Vorderstütze (1A) und eine linke und rechte Hinterstütze (5) verbunden ist;
wobei das Dach (2) ein vorderes Kopfstück (2b), eine linke und rechte Dachseitenschiene (2a) und ein hinteres Kopfstück (2c) aufweist, die so angeordnet sind, daß sie eine Dachöffnung (3) einfassen;
eine Heckscheibe (4b), die an der linken und rechten Hinterstütze (5) und dem hinteren Kopfstück (2c) befestigt ist; und
eine flexible Dachhaut (12), die in Längsrichtung der Fahrzeugkarosserie des Fahrzeugs faltbar oder aufwickelbar ist und im ausgestreckten Zustand, in welchem die flexible Dachhaut sich in der Längsrichtung erstreckt, so groß ist wie die Dachöffnung (3), und die vorgesehen ist, die Dachöffnung (3) zu schließen;
in welcher die flexible Dachhaut (12) an ihrem vorderen Endteil am vorderen Kopfstück (2b), an ihrem linken und rechten Seitenteil jeweils an der linken und rechten Dachseitenschiene (2a,2a), und an ihrem hinteren Endteil am hinteren Kopfstück (2c) anliegt, wenn die Dachhautöffnung (3) sich in einem geschlossenen Zustand befindet, in welchem die flexible Dachhaut (12) in einem ausgestreckten Zustand die Dachöffnung (3) abdeckt;
wobei die flexible Dachhaut (12) wahlweise eine erste Stellung oder eine zweite Stellung einnimmt, wobei die erste Stellung eingenommen wird, wenn die flexible Dachhaut (12) im geschlossenen Zustand ist, und die zweite Stellung eingenommen wird, wenn die flexible Dachhaut eingeschlossen oder in einem gefalteten oder gewickelten Zustand ist, wobei die flexible Dachhautanordnung dadurch gekennzeichnet ist, daß die genannten Stellungen durch Verschieben der flexiblen Dachhaut (12) entlang der beiden linken und rechten Dachseitenschienen und der beiden linken und rechten Hinterstützen (5,5) eingenommen werden und daß die flexible Dachhaut in einer Position hinter der Heckscheibe (4b) und in der Gegend von ihrem unteren Endteil angeordnet oder untergebracht ist.

2. Flexible Dachhautanordnung nach Anspruch 1, wobei die flexible Dachhaut (12) einen harten Vorderteil (13) aufweist, der einen vorderen Endteil der flexiblen Dachhaut (12) aus einer harten Platte bildet, einen harten Hinterteil (14), der aus einem hinteren Endteil in Form einer harten Platte besteht, und einen Lederdachhautteil (16) mit einem flexiblen Blatt, das den harten Vorderteil (13) mit dem harten Hinterteil (14) verbindet, und wobei die flexible Dachhaut aufgrund ihrer Flexibilität, die vom Lederdachhautteil (16) herrührt, faltbar ist.

3. Flexible Dachhautanordnung nach Anspruch 2, wobei:
das hintere Kopfstück (2c) mit einem Eingriffsstück (66) in einer ortsfesten Weise vorgesehen ist, und
der harte Hinterteil (14) mit einem hinteren Ansatz (64) so vorgesehen ist, damit er an dem Eingriffsstück (66) von hinten angrenzen kann; und
der harte Hinterteil (14) so eingerichtet ist, damit er nicht nach vorne von einer Position versetzt wird, bei der die flexible Dachhaut (12) in einem geschlossenen Zustand ist aufgrund des Angrenzens des Eingriffsstücks (66) am Ansatz (64).

4. Flexible Dachhautanordnung nach Anspruch 2 oder 3, die weiter ein Antriebsmittel (65) zum Antrieb umfaßt, um es so dem harten Vorderteil (13) und dem harten Hinterteil (14) zu ermöglichen, einander näher zu kommen.

5. Flexible Dachhautanordnung nach einem der Ansprüche 2 bis 4, wobei die flexible Dachhaut (12) eine dritte Stellung einnimmt, in welcher der harte Vorderteil (13) in einem ausgestreckten Zustand oder in einem gefalteten Zustand bei einer Position im Bereich des harten Hinterteils (14) in einem Zustand ist, in welchem der harte Hinterteil (14) am hinteren Kopfstück (2c) angrenzt und die flexible Dachhaut (12) ihren gefalteten Zustand zwischen der dritten und der zweiten Stellung beibehält.

6. Flexible Dachhautanordnung nach einem der Ansprüche 3 bis 5, die weiter ein Antreibmittel (37,149) aufweist, um den harten Vorderteil (13) anzutreiben und eine Stellung der flexiblen Dachhaut (12) zwischen der ersten und zweiten Stellung zu ändern.

7. Flexible Dachhautanordnung nach Anspruch 6, wobei die Antreibmittel (37) aus einem Motor (40) und einem Antreibdraht (38) bestehen, der an dem einen Endteil mit dem harten Vorderteil (13) verbunden sind und durch den Motor (40) hin- und her antreibbar ist.

8. Flexible Dachhautanordnung nach Anspruch 1, wobei die beiden links und rechts angeordneten Dachseitenschienen (2a) und die beiden links und rechts angeordneten Hinterstützen (5) jeweils mit einem Führungsteil vorgesehen sind, um jeweils den linken und rechten Endteil der flexiblen Dachhaut (12) zu führen, und wobei der Führungsteil einen ersten Führungsteil (21a) aufweist, der sich in einer longitudinalen Richtung der Fahrzeugkarosserie entlang der Dachseitenschienen (2a) erstreckt sowie einen zweiten Führungsteil (21b), der mit dem ersten Führungsteil (21a) in Verbindung steht und sich im wesentlichen entlang der Hinterstützen (5) erstreckt.

9. Flexible Dachhautanordnung nach Anspruch 8, wobei die Führungsschiene (21) mit dem Führungsteil getrennt ausgebildet ist ebenso wie die Dachseitenschiene (2a) und wie die Hinterstütze (5), und wobei die Führungsschiene (21) an der Dachseitenschiene (2a) und der Hinterstütze (5) befestigt ist.

10. Flexible Dachhautanordnung nach Anspruch 1, wobei:
die flexible Dachhaut (12) flexibel ist und als Ganzes wickelbar ist;
ein Aufwickelstab (57), der sich in einer Querrichtung erstreckt, drehbar bei einer Position hinter der Heckscheibe (4b) und bei ihrem unteren Endteil angeordnet ist; und
der Aufwickelstab (57) mit dem hinteren Endteil der flexiblen Dachhaut (12) über einen Verbindungsriemen (59) verbunden ist.

11. Flexible Dachhautabdeckung nach Anspruch 10, wobei eine Aufwickelrolle (57) so vorgesehen ist, daß sie in einer Richtung angetrieben werden kann, in welcher die flexible Dachhaut (12) gewickelt wird.

12. Flexible Dachhautanordnung nach Anspruch 10 oder 11, die weiter Antreibmittel (37) zum Antreiben eines vorderen Endteils der flexiblen Dachhaut (12) aufweisen.

13. Flexible Dachhautanordnung nach Anspruch 12, wobei die genannten Antreibmittel einen Motor (40) aufweisen sowie einen Antreibdraht (38), der durch den Motor (40) hin- und her antreibbar ist und der an seinem einen Endteil mit dem Vorderteil der flexiblen Dachhaut (12) verbunden ist.

14. Flexible Dachhautanordnung nach Anspruch 1 und einem der Ansprüche 8 bis 13, wobei die Fahrzeugkarosserie (1) mit einem konkaven Bereich (43,8a) bei einer Position hinter der Heckscheibe (4b) und in der Gegend vom unteren Endteil versehen ist, um die flexible Dachhaut in der zweiten Stellung unterzubringen.

15. Flexible Dachhautanordnung nach Anspruch 14, wobei der konkave Teil (8a) mit einem Deckel (112a) versehen ist, um den konkaven Teil (8a) zu schließen, der die flexible Dachhaut (12) beherbergt.

16. Flexible Dachhautanordnung nach Anspruch 15, wobei:
ein Aufbewahrungsraum (8) bei einer Position hinter dem unteren Teil der Heckscheibe (4b) vorgesehen ist;
der Aufbewahrungsraum (8) einen Hilfsraum (8a) aufweist, der den konkaven Teil bildet und einen Hauptraum (8b), der bei einer Position hinter dem Hilfsraum (8a) angeordnet ist;
ein Aufbewahrungsraumdeckel zum Verschließen des Aufbewahrungsraums (8) einen Hilfsdeckel (112a) zum Öffnen oder Verschließen des Hilfsraums (8a) sowie einen Hauptdeckel (112b) zum Öffnen oder Verschließen des Hauptraums (8b) aufweist; und
wobei der Hilfsdeckel (112a) vorne und der Hauptdeckel (112b) hinten geöffnet wird.

17. Flexible Dachhautanordnung nach Anspruch 15 oder 16, die weiter umfaßt:
erste Antreibmittel (37) zum Antreiben der flexiblen Dachhaut (12) zwischen der ersten und zweiten Stellung;
zweite Antreibmittel (149) zum Antreiben des genannten Deckels (112a) zum Öffnen oder Schließen;
eine Antriebssteuereinrichtung (159) zum Schließen des Deckels (112a) in einer üblichen Zeitspanne durch Steuern der zweiten Antreibmittel (149) synchron mit den ersten Antreibmitteln (37) oder zum Öffnen des Deckels (112a), wenn die flexible Dachhaut (12) in den konkaven Teil (8a) aufgenommen oder daraus herausgenommen wird.

18. Flexible Dachhautanordnung nach einem der Ansprüche 14 bis 17, wobei:
die flexible Dachhaut (12) einen harten Vorderteil (13) umfaßt, der einen vorderen Endteil der flexiblen Dachhaut (12) in Form einer harten Platte bildet, einen harten Hinterteil (14), der einen hinteren Endteil davon in Form einer harten Platte bildet, und einen Lederdachhautteil (16), der ein flexibles Blatt umfaßt, das den harten Vorderteil (13) mit dem harten Hinterteil (14) verbindet, und wobei die flexible Dachhaut (12) aufgrund ihrer Flexibilität, die durch den Lederdachhautteil (16) herrührt, faltbar ist;
eine Verbindungsvorrichtung (25) so vorgesehen ist, daß sie entlang der Dachseitenschienen (2a) und der Hinterstützen (5) verschoben werden kann; und
wobei die Verbindungsvorrichtung (25) mit dem harten Vorderteil (13) über einen Verbindungsmechanismus (46) verbunden ist;
ein Nocken (45a,45b) zur Verbindung vorgesehen ist, der auf den Verbindungsmechanismus (46) in der Nähe des konkaven Teils (43) einwirkt und der den harten Vorderteil (13) so neigt, daß er im wesentlichen horizontal in Übereinstimmung mit der Verschiebung der Verbindungsvorrichtung (25) in Richtung auf den konkaven Teil (43) ist;
in welchem der konkave Teil (43) durch den harten Vorderteil (13) in einem im wesentlichen horizontalen Zustand abgedeckt wird, wenn die flexible Dachhaut (12) die zweite Stellung einnimmt.

19. Flexible Dachhautanordnung nach Anspruch 18, die weiter umfaßt:
einen Antreibdraht, der verschiebbar entlang der Dachseitenschienen (2a) und der Hinterstützen (5) angeordnet ist, und der an seinem einen Endteil mit der Verbindungsvorrichtung (25) verbunden ist; und
einen Motor (40), um den Antreibdraht (38) hin- und her anzutreiben.

## Revendications

1. Dispositif de capote flexible d'un véhicule comprenant :
- un panneau de toit (2) relié à la carrosserie (1) d'un véhicule par au moins une paire de montants antérieurs (1A) à gauche et à droite et une paire de montants postérieurs (5) à gauche et à droite;
- ledit panneau de toit (2) comprenant un renfort de pavillon (2b), une paire de rails (2a) latéraux du toit à gauche et à droite, et un renfort postérieur (2c) qui sont disposés de manière à entourer une ouverture (3) du panneau de toit;
- un panneau en verre (4b) de lunette arrière fixé à ladite paire de montants postérieurs (5) à gauche et à droite et audit renfort postérieur (2c); et
- une capote flexible (12) pouvant être pliée ou enroulée dans le sens longitudinal de la carrosserie du véhicule et étant, dans son état déployé, d'une taille aussi grande dans ledit sens longitudinal que ladite ouverture (3) du panneau de toit et étant prévue pour fermer ladite ouverture (3) du panneau de toit;
- dans lequel ladite capote flexible (12) est jointive sur son extrémité antérieure avec ledit renfort de pavillon (2b), sur ses extrémités latérales gauche et droite, respectivement avec lesdits rails latéraux (2a) et 2a) du toit, à gauche et à droite, et sur son extrémité postérieure avec ledit renfort postérieur (2c) quand ladite ouverture (3) du panneau de toit est dans un état fermé dans lequel ladite capote flexible (12) dans cet état d'extension recouvre ladite ouverture (3) du panneau de toit;
- ladite capote flexible (12) prenant selectivement une première position et une deuxième position, ladite première position étant prise quand ladite capote flexible (12) est dans ledit état fermé et ladite deuxième position étant prise quand ladite capote flexible (12) est logée dans un état plié ou enroulé,
- ledit dispositif de capote flexible étant **caractérisé** en ce que lesdites positions sont prises par déplacement de ladite capote flexible (12) le long de ladite paire de rails latéraux (2a) et (2a) du toit à gauche et à droite et de ladite paire de montants postérieurs (5) et (5) à gauche et à droite, et en ce que la capote flexible est logée en une position à l'arrière dudit panneau en verre (4b) de la lunette arrière et autour d'une partie d'extrémité inférieure de celui-ci.

2. Dispositif de capote flexible selon la revendication 1, dans lequel ladite capote flexible (12) comprend une partie dure antérieure (13) constituant une partie d'extrémité antérieure de ladite capote flexible, ayant la forme d'une plaque dure, une partie dure postérieure (14) constituant une partie d'extrémité postérieure de la capote, sous la forme d'une plaque dure, et une partie de capote en cuir (16) comprenant une feuille flexible reliant ladite partie dure antérieure (13) à ladite partie dure postérieure (14) et ladite capote flexible (12) est pliable grâce à la souplesse produite par ladite partie de capote en cuir (16).

3. Dispositif de capote flexible selon la revendication 2, dans lequel :
- ledit renfort postérieur (2c) est muni, de manière fixe, d'une pièce d'engagement (66); et
- ladite partie dure postérieure (14) est munie d'un saillant (64) dirigé vers l'arrière de manière à pouvoir être rendue jointive avec ladite pièce d'engagement (66) à partir de l'arrière; et
- ladite partie dure postérieure (14) est réglée de manière à ne pas être déplacée vers l'avant à partir d'une position dans laquelle ladite capote flexible (12) est en un état fermée par suite de la venue en butée de ladite pièce d'engagement (66) avec ledit saillant (64).

4. Dispositif de capote flexible selon la revendication 2 ou 3, comprenant en outre un moyen d'entraînement (65) pour entraîner ladite partie dure antérieure (13) et ladite partie dure postérieure (14) à se rapprocher l'une de l'autre.

5. Dispositif de capote flexible selon l'une quelconque des revendications 2 à 4, dans lequel ladite capote flexible (12) prend une troisième position dans laquelle ladite partie dure antérieure (13) est dans un état d'extension ou dans un état plié en une position autour de ladite partie dure postérieure (14) dans un état dans lequel ladite partie dure postérieure (14) est en butée avec ledit renfort postérieur (2c) et ladite capote flexible (12) garde son état plié entre lesdites troisième et deuxième positions.

6. Dispositif de capote flexible selon l'une quelconque des revendications 3 à 5, comprenant en outre un moyen d'entraînement (37, 149) pour entraîner ladite partie dure antérieure (13) et pour modifier une position de ladite capote flexible (12) entre lesdites première et deuxième positions.

7. Dispositif de capote flexible selon la revendication 6, dans lequel ledit moyen d'entraînement (37) comprend un moteur (40) et un câble d'entraînement (38) relié par une de ses extrémités à ladite partie dure antérieure (13) et pouvant être entraîné en sens alternatif par ledit moteur (40).

8. Dispositif de capote flexible selon la revendication 1, dans lequel ladite paire de rails (2a) latéraux du toit, à gauche et à droite, et ladite paire de montants postérieurs (5) à gauche et à droite, sont munis chacun d'une partie de guidage pour guider respectivement les parties d'extrémité à gauche et à droite de ladite capote flexible (12) et ladite partie de guidage comprend une première partie de guidage (21a) s'étendant dans le sens longitudinal de la carrosserie le long desdits rails (2a) latéraux du toit et une deuxième partie de guidage (21b) communiquant avec ladite première partie de guidage (21) et s'étendant pratiquement le long desdits montants postérieurs (5).

9. Dispositif de capote flexible selon la revendication 8, dans lequel ledit rail de guidage (21) avec ladite partie de guidage est formé séparément comme ledit rail (2a) latéral du toit et comme ledit montant postérieur (5) et ledit rail de guidage (21) est fixé audit rail (2a) latéral du toit et audit montant postérieur (5).

10. Dispositif de capote flexible selon la revendication 1, dans lequel :
- ladite capote flexible (12) est flexible et peut être enroulée comme un tout;
- une barre d'enroulement (57) s'étendant dans un sens transversal est montée rotative en une position à l'arrière dudit panneau de verre (4b) de la lunette arrièreet à une partie d'extrémité inférieure de celui-ci; et
- ladite barre d'enroulement (57) est reliée à une partie d'extrémité postérieure de ladite capote flexible (12)par une courroie de liaison (59).

11. Dispositif de capote flexible selon la revendication 10, dans lequel un rouleau d'enroulement (57) est prévu de manière à être entraîné dans le sens d'enroulement de ladite capote flexible (12).

12. Dispositif de capote flexible selon la revendication 10 ou 11, comprenant en outre un moyen d'entraînement (37) pour entraîner une partie d'extrémité antérieure de ladite capote flexible (12).

13. Dispositif de capote flexible selon la revendication 12, dans lequel ledit moyen d'entraînement comprend un moteur (40) et un câble d'entraînement (38) pouvant être entraîné en sens alternatif par ledit moteur (40) et relié par une de ses extrémités à ladite partie d'extrémité antérieure de ladite capote flexible (12).

14. Dispositif de capote flexible selon la revendication 1 et selon l'une quelconque des revendications 8 à 13, dans lequel ladite carrosserie (1) du véhicule est munie d'une partie concave (43, 8a) en une position à l'arrière dudit panneau de verre (4b) de la lunette arrière et autour de sa partie d'extrémité inférieure pour loger ladite capote flexible dans ladite deuxième position.

15. Dispositif de capote flexible selon la revendication 14, dans laquelle ladite partie concave (8a) est munie d'un organe de couvercle (112a) pour fermer ladite partie concave (8a) logeant ladite capote flexible (12).

16. Dispositif de capote flexible selon la revendication 15, dans lequel :
- un compartiment de coffre (8) est prévu en une position à l'arrière d'une partie inférieure dudit panneau de verre (4b) de la lunette arrière;
- ledit compartiment de coffre (8) comprend un compartiment auxiliaire (8a) constituant ladite partie concave et un compartiment principal (8b) situé en une position à l'arrière dudit compartiment auxiliaire (8a);
- un couvercle de coffre pour fermer ledit compartiment de coffre (8) comprend un couvercle auxiliaire (112a) pour ouvrir ou fermer ledit compartiment auxiliaire (8a) et un couvercle principal (112b) pour ouvrir ou fermer ledit compartiment principal (8b); et
- ledit couvercle auxiliaire (112a) s'ouvre à l'avant et ledit couvercle principal (112b) s'ouvre à l'arrière.

17. Dispositif de capote flexible, selon la revendication 15 ou 16, comprenant en outre :
- un premier moyen d'entraînement (37) pour entraîner ladite capote flexible (12) entre ladite première position et ladite deuxième position;
- un deuxième moyen d'entraînement (149) pour entraîner ledit organe de couvercle (112a) pour l'ouvrir ou le fermer;
- un moyen de commande d'entraînement (159) pour fermer ledit organe de couvercle (112a) en temps ordinaire en commandant ledit deuxième moyen d'entraînement (149) en synchronisme avec ledit premier moyen d'entraînement (37) ou pour ouvrir ledit organe de couvercle (112a) lors de l'insertion de ladite capote flexible (12) dans ladite partie concave (8a) ou lors de son extraction hors de celle-ci.

18. Dispositif de capote flexible selon l'une quelconque des revendications 14 à 17, dans lequel :
- ladite capote flexible (12) comprend une partie dure antérieure (13) constituant une partie d'extrémité antérieure de ladite capote flexible (12) ayant la forme d'une plaque dure, une partie dure postérieure (14) constituant une partie d'extrémité postérieure de celle-ci ayant la forme d'une plaque dure, et une partie de capote en cuir (16) comprenant une feuille flexible reliant ladite partie dure antérieure (13) à ladite partie dure postérieure (14) et ladite capote flexible (12) est pliante grâce à la flexibilité produite par ladite partie de capote en cuir (16);
- une chape de liaison (25) est prévue de manière à être déplacée le long desdits rails (2a) latéraux du toit et desdits montants postérieurs (5); et
- ladite chape de liaison (25) est reliée à ladite partie dure antérieure (13) par un mécanisme de tringlerie (46);
- une came (45a, 45b) pour l'opération de liaison, agissant sur ledit mécanisme de tringlerie (46) au voisinage de ladite partie concave (43) et faisant incliner ladite partie dure antérieure (13) de manière à la rendre sensiblement horizontale de manière correspondant à un déplacement de ladite chape de liaison (25) vers ladite partie concave (43);
- dans lequel ladite partie concave (43) est recouverte par ladite partie dure antérieure (13) se trouvant dans un état sensiblement horizontal quand ladite capote flexible (12) prend ladite deuxième position.

19. Dispositif de capote flexible selon la revendication 18, comprenant en outre :
- un câble d'entraînement disposé de manière à être déplacé le long desdits rails latéraux (2a) du toit et desdits montants postérieurs (5) et relié par une de ses extrémités à ladite chape de liaison (25); et
- un moteur (40) pour entraîner ledit câble d'entraînement (38) selon un mouvement alternatif.
